(19) Europäisches Patentamt

European Patent Office

Office européen des brevets

(11) **EP 1 301 039 B1**

(12) **EUROPEAN PATENT SPECIFICATION**

(45) Date of publication and mention
of the grant of the patent:
**13.12.2006 Bulletin 2006/50**

(51) Int Cl.:
**H04N 7/173** (2006.01)

(21) Application number: **02019712.5**

(22) Date of filing: **03.09.2002**

(54) **A video distribution device and a video receiving device**

Gerät zum Verteilen von Video und Gerät zum Empfangen von Video

Dispositif de distribution de vidéo et dispositif de réception de vidéo

(84) Designated Contracting States:
**DE FR GB**

(30) Priority: **07.09.2001 JP 2001272506**

(43) Date of publication of application:
**09.04.2003 Bulletin 2003/15**

(73) Proprietor: **MATSUSHITA ELECTRIC INDUSTRIAL CO., LTD.**
**Kadoma-shi, Osaka 571-8501 (JP)**

(72) Inventors:
• **Uesaki, Akira**
  **Takatsuki-shi,**
  **Osaka 569-1031 (JP)**
• **Kobayashi, Tadashi**
  **Ibaraki-shi,**
  **Osaka 567-0032 (JP)**
• **Hijiri, Toshiki**
  **Hirakata-shi,**
  **Osaka 573-0071 (JP)**
• **Mochizuki, Yoshiyuki**
  **Suita-shi,**
  **Osaka 564-0025 (JP)**

(74) Representative: **Holmes, Miles Keeton et al**
**Novagraaf International S.A.**
**25, avenue du Pailly**
**1220 Les Avanchets,**
**Geneva (CH)**

(56) References cited:
EP-A- 1 021 036    EP-A- 1 089 207
WO-A-00/28731    WO-A-98/46029
US-B1- 6 219 837

**Description**

**BACKGROUND OF THE INVENTION**

**(1) Field of the Invention**

The present invention relates to a video distribution device distributing a video such as a sports program and a video receiving device receiving the video.

**(2) Description of the Prior Art**

With the advance of infrastructure development for a communication network, technologies for distributing and receiving videos like a sport program have been developed. As a conventional technology for distributing and receiving such videos, there are a video information distribution system released in the Japanese Laid-Open Patent Application No. 7-95322 (The First Laid-Open Patent) and a program distribution device released in the Japanese Laid-Open Patent Application No. 2-54646 (The Second Laid-Open Patent).

The video information distribution system released in The First Laid-Open Patent consists of a video center, video-dial tone trunk and a user terminal. When a user calls up the video center, the video center transmits a program requested by the user via a transmission line. The video-dial tone trunk receives video information transferred rapidly from the video center, reproduces it to video information at normal speed, and transmits it to the user terminal via a low speed transmission line.

The program distribution device disclosed in The Second Laid-Open Patent is composed of a memory device holding two or more moving picture programs, a distribution device receiving a program distribution request and an advertisement insertion request from a terminal device via a network, dividing a moving picture program and the specified advertisement request divided into an information block and distributing them via the network, and a control unit controlling to make billing be varied according to a timing of the advertisement insertion specified by the advertisement insertion request.

However, with the conventional technologies mentioned above, a video distributed to a viewer is the one taken by a producer's intention only from a specific point of view. It is impossible for the viewer to do some operation that allows him to view the video based on his own preference or to change the point of view. For example, in a sport program such as a football game, though the viewer has a specific preference to watch his favorite player more, he is forced to watch the program even if it shows other players for most of the time and his favorite player appears only a little.

Also, in the above conventional technologies, there is a need to record a program in advance at the video center or in the memory unit. The problem they have is that they do not carry a mechanism to distribute a video in a real time manner.

The European patent application EP 1 021 036 A2 discloses a digital interactive system for providing full interactivity with live programming events. This system distributes a video via a communication network and comprises a video switcher for acquiring a plurality of videos from various cameras located at an event, and a interactive digital box for verifying a conformity level of video details with a viewer preference and selecting a video according to a conformity level.

The international patent application WO 00/28731 discloses an interactive video system including means for analyzing details contained in a video and generating detail information as analysis result.

**SUMMARY OF THE INVENTION**

Therefore, for coping with such a situation, the present invention aims at providing a video distribution device and a video receiving device that make video distribution possible to reflect the viewer's preference.

Furthermore, another purpose of the present invention is to provide the video distribution device and the video receiving device that are capable of distributing not only the stored videos but also real-time (live) videos reflecting the viewer's preference.

To achieve above objectives, the video distribution device according to the present invention is a video distribution device that distributes a video via a communication network comprising: a video acquisition unit operable to acquire plural videos taken from various perspectives; a video analysis unit operable to analyze details contained in the videos on a video basis and generate detail information as analysis results; and a video matching unit operable to verify a conformity level of the video detail with a viewer's preference based on each of the detail information and preference information notified from the viewer, decide a video with the high conformity level from the plural videos, and distribute the video.

In other words, one video met with the viewer's preference is decided by a conformance level of the viewer's preference with detail information generated by each video from plural videos taken from various perspectives.

By doing so, the viewer is able to view selectively the video met with his own preference. Besides, a real-time video can also be treated as a subject for distribution by repeating processes executed at high speed through the video acquisition unit, video analysis unit and video matching unit.

Here, the detail information may include information identifying an object and information indicating a display position or a display area of the object. Also, a certain receptacle to get preference information may be distributed to the video receiving device side to have it enter a preference level of the object in the receptacle so that the preference information can be obtained. When the viewer specifies a certain position of the distributed video on the screen, the object located on the position is specified and additional information for this object may be sent.

Furthermore, the present invention may be a video distribution device that distributes a video via a communication network comprising: a video acquisition unit operable to acquire plural videos taken from various perspectives; a video analysis unit operable to analyze details contained in the videos on a video basis and generate detail information as analysis results as detail information; and a video multiplexing unit operable to multiplex each video and each of the detail information for the plural videos, and distribute the multiplexed video and detail information. In this case, a conformance level of the preference information sent from the viewer with each of the detail information distributed from the video distribution device can be verified at the video receiving device side, a video to be reproduced is selected from multiple videos distributed from the video distribution device, and then the decided video may be reproduced.

By doing so, in such a video receiving device that receives each video and each detail information distributed from the video distribution device, if the conformance level of each detail information with the preference information notified by the viewer is verified, the video to be reproduced is decided, and the decided video is reproduced, the viewer is able to view selectively the video met with his preference.

Also, the present invention may be realized as a program that makes a computer function as such a characteristic means, or realized as a recording media to record the program. Then, the program according to the present invention may be distributed via a communication network such as the Internet or a recording media, etc.

The viewer is allowed to view selectively a video, for example, the video of a sport event program in which his favorite player frequently appears, and he can have a pleasant time. Therefore, the present invention greatly improves a service value provided by the video distribution system and its practical merit is extremely high.

**BRIEF DESCRIPTION OF THE DRAWINGS**

Fig. 1 is a block diagram that shows a functional structure of the video distribution system 1 according to the first embodiment of the present invention.

Fig. 2 is a sequence diagram that shows actions of the video distribution system 1.

Fig.3A is a diagram viewed from a diagonal angle, which shows a relationship between a position in a camera coordinate system and a position on a projection plane used in the first embodiment of the present invention.

Fig.3B is a diagram to show Fig.3A viewed from an upper side along with the projection plane.

Fig.3C is a diagram to show Fig.3A viewed from a lateral direction along with the projection plane.

Fig. 4 is a diagram to show a sample video acquired from the video acquisition unit 110 shown in Fig. 1.

Fig. 5 is a diagram to show a sample detail information generated by the video analysis unit 120 shown in Fig. 1.

Fig. 6 is a diagram to show a sample of the preference value entry dialogue generated by a video matching unit 130 shown in Fig. 1.

Fig. 7 is a diagram to show a sample preference information sent from the video receiving device shown in Fig. 1.

Fig. 8 is a flow chart of processes executed when the video matching unit 130 uses the most preferred object to decide the video to be distributed.

Fig. 9 is a flow chart for processes executed when the video matching unit 130 decides the video to be distributed through a comprehensive judgement from an individual preference level.

Fig. 10 is a diagram of sample additional information sent from the additional information providing unit 150 shown in Fig. 1.

Fig. 11 is a block diagram to show a functional structure of the video distribution system 2 according to the second embodiment of the present invention.

Fig. 12 is a sequence diagram to show actions of the video distribution system 2.

Fig. 13 is a diagram for a sample multiplexing and separation method for a video, detail information and additional information.

Fig. 14 is a diagram to show a live concert stage of a group, "Spade".

Fig. 15 is a diagram to show how momentum is analyzed from 2 marker videos (P1 and P2).

Fig. 16 is a diagram to show a sample detail information generated by a video analysis unit 120.

Fig. 17 is a flow chart for processes executed when a video matching unit 130 decides the video to be distributed through a comprehensive judgement from an individual preference level.

## DESCRIPTION OF THE PREFERRED EMBODIMENT (S)

(The First Embodiment)

The following is an explanation of the video distribution system according to the first embodiment of the present invention with reference to diagrams. In the explanation of this embodiment, a video mainly focusing on players in the case of relay broadcasting of some sport event like a football game is given as an example of a shooting object in limited space. However, this invention is applicable to any discretional shooting space or shooting object.

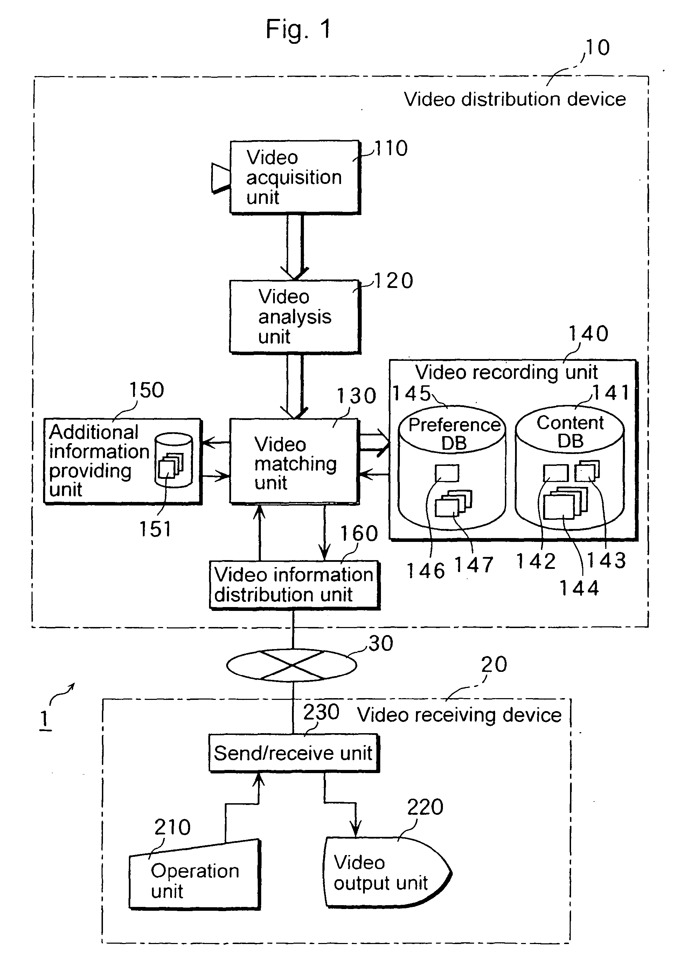

Fig. 1 is a block diagram to show a functional structure of the video distribution system 1 according to the first embodiment of the present invention.

The video distribution system 1 according to the first embodiment of the present invention is a communication system executing stream distribution of contents such as a video corresponding to user's preference. The video distribution system 1 is composed of a video distribution device 10, a video receiving device 20 and a communication network 30 connecting them.

The video distribution device 10 is a distribution server consisting of a computer, etc. that constructs a video content in a real time manner, which is made up through a compilation process such as selecting and switching over a video from multiple videos (multi-perspective videos) for every several frames according to the user's preference and a preference history, and executes stream distribution to the video receiving device 20. The video distribution device 10 is composed of a video acquisition unit 110, a video analysis unit 120, a video matching unit 130, a video recording unit 140, an additional information providing unit 150 and a video information distribution unit 160, etc.

The video acquisition unit 110 is camera equipment (a video camera, etc.) acquiring multiple videos (multi-perspective videos) of objects spread out in a designated shooting space (e.g. a football field) that are taken from various perspectives and angles within a limited shooting space. The multi-perspective videos acquired by the video acquisition unit 110 are transmitted to the video analysis unit 120 via a cable or wireless communication.

The video analysis unit 120 acquires details of each video (to be more specific, what object (e.g. a player) is taken at which position on a screen) respectively by each frame, and generates the acquired result for each video frame as detail information described with a descriptor for a multimedia content such as MPEG7.

By comparing user's preference and the preference history sent from the video receiving device 20 with each video detail information for a live content acquired by the video acquisition unit 110 or a storage content held in the video recording unit 140, the video matching unit 130 constructs the video content, which is made up through a compilation process such as selecting and switching over a video to another among multiple videos (multi-perspective videos) for every several frames according to the user's preference and a preference history, in a real time manner. The video matching unit 130 also stores the multi-perspective videos attached with the detail information in a content database 141 of the video recording unit 140, and generates and stores a preference value entry dialogue 146 in a preference database 145.

The video recording unit 140 is a hard disk, etc. that hold a content database 141 holding the storage content to be distributed, etc. and a preference database 145 acquiring preference on a user basis. The content database 141 memorizes a mode selection dialogue 142 to select a live (live broadcasting) mode or a storage (broadcasting by a recorded video) mode, a live content being broadcast by relay, a list of stored contents/storage content 143, and the contents themselves 144. The preference database 145 memorizes the preference value entry dialogue 146 per each content for entering the preference value (preference level) for the object and a preference history table 147 per each user that stores preference history entered by the user.

The additional information providing unit 150 is a hard disk, etc. holding an additional information table 151 that preliminarily stores distribution video related information by each live or storage content provided to a viewer (some additional information such as the object's (target object) profile. For example, a football player's profile like his birthday in the case of relay broadcasting of a football game). Information such as "a birthday", "the main personal history", "characteristics" and "the player's comment" for of an individual player is pre-registered in the additional information table 151. When there is a notification to specify a certain player's name, etc. from the video matching unit 130, the additional information of the specific player is sent to the video receiving device 20.

The video information distribution unit 160 is an interactive communication interface and driver software, etc. to communicate with the video receiving device 20 via the communication network 30.

The video receiving device 20 is a personal computer, a mobile phone device, a mobile information terminal, a digital broadcasting television, etc., which communicates with the user for selecting the live mode or the storage mode and entering the preference value and that provide the video content distributed from the video distribution device 10 to the user. The video receiving device 20 is composed of an operation unit 210, a video output unit 220, a send/receive unit 230, etc.

The operation unit 210 is a device such as a remote controller, a keyboard or a pointing device like a mouse, which specifies the content requested by the user through dialogues with the user, enters the preference value and sends it as the preference value information to a send/receive unit 230, and sends the object's position information indicated in the video output unit 220 to the send/receive unit 230.

The send/receive unit 230 is a send/receive circuit or driver software, etc. for serial communications with the video distribution device 10 via the communication network 30.

The communication network 30 is an interactive transmission line that connects the video distribution device 10 with the video receiving device 20, and is a communication network such as the Internet through a broadcasting/communication network like CATV, a telephone network and a data communication network, etc.

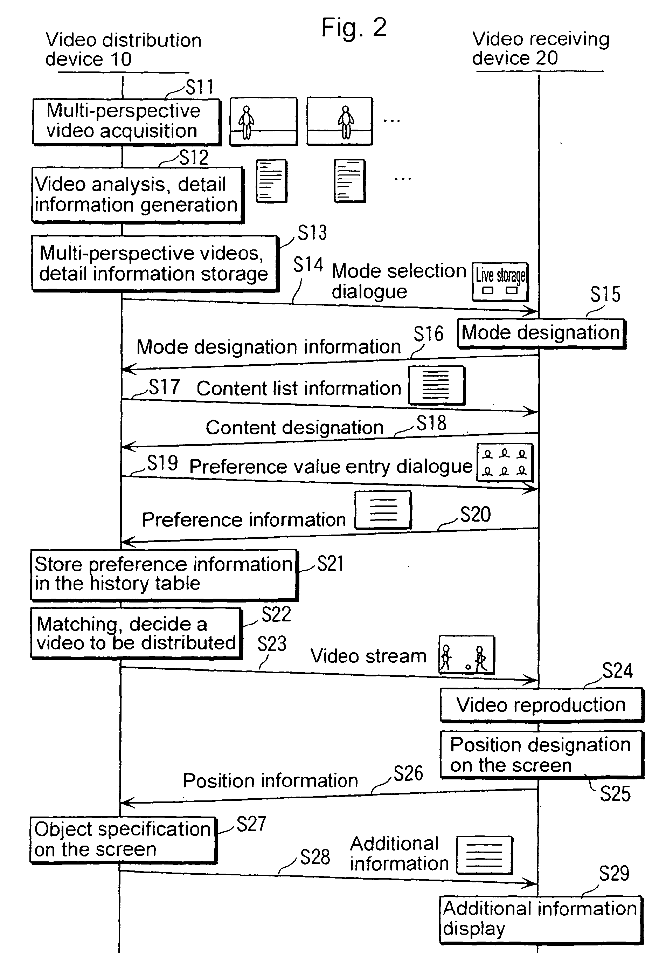

Actions of the video distribution system 1 structured as above are explained in order along with sequences (the main processing flow in the present system) indicated in Fig. 2. The sequences in the diagram show a flow of processes for the multi-perspective videos at a certain point of time.

The video acquisition unit 110 of the video distribution device 10 is composed of plural camera equipment such as a video camera capable of taking videos. The video acquisition unit 110 acquires multiple videos (multi-perspective videos) of objects in the limited shooting space respectively taken from various perspectives and angles (S11). Since the video distribution device 10 in this embodiment requires videos taking the limited space from various perspectives and angles, it is desirable to locate as much camera equipment as possible and spread them over the shooting space. However, the present invention is not limited by a number of equipment/devices and their positions. The multi-perspective videos acquired by the video acquisition unit 110 are sent to the video analysis unit 120 through a cable or a wireless communication. In the present embodiment, all of the videos taken by each video acquisition unit 110 are supposed to be sent to one video analysis unit 120 and put under its central management, but the video analysis unit 120 may be available for each camera equipment.

The video analysis unit 120 analyzes various videos acquired by the video acquisition unit 110, respectively acquires details of each video (what object (e.g. a player) is taken at which position of the screen) per frame, and generates the acquired result as the detail information described with a descriptor of the multimedia content such as MPEG7 for each video frame (S12). Generation of the detail information requires 2 steps: (1) extraction of the detail information, and (2) description of the detail information. The detail information is largely depended on the detail of the video taken. For example, in the case of relay broadcasting of some sport event like a football game, players in the game would be the major part of the videos. Therefore, in the present embodiment, the players in the video are identified through the analysis on the video, and the player's name and the position where the player appears in the video are generated as the detail information. The below describes 2 methods as an extraction example of the detail information (one method using a measuring instrument and another method using a video process) to identify the player in the video (who appears in the video) and to realize the acquisition of his position.

1. The method using the measuring instrument

With the method using the measuring instrument, it is possible to measure a three-dimensional position in a coordinate system where an optional point in space is set as a standard point (hereinafter referred to as a global coordinate system). A position censor assigned by a unique ID number (e.g. GPS, hereinafter referred to as a position censor) is attached to an individual object to be identified. By doing so, it is possible to identify each individual object and acquire its three-dimensional position. Then, cameras are located at various positions and angles to take videos.

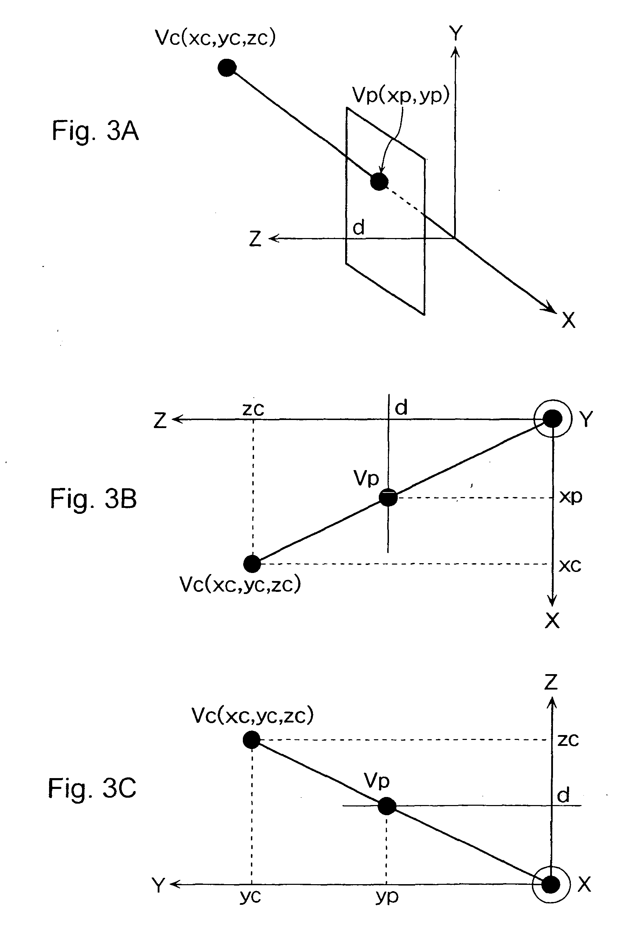

In the first embodiment, the camera equipment is fixed at each location, and any panning or tilt technique is not used. Therefore, sufficient camera equipment must be available to cover the entire shooting space even if they are fixed at each location. The position in the global coordinate system and a perspective direction vector are found for all of the cameras fixed at each position and notified to the video analysis unit 120 in advance. As shown in Fig.3A, suppose a projection direction of the cameras used in the present embodiment is consistent with a perspective direction (the Z-axis) expressed by a coordinate system fixed for the camera (hereinafter referred to as a camera coordinate system), and its projection center is located at Z=0 on the Z-axis and its projection surface is Z=d. From the position censor attached to the object, the ID number assigned to each individual position censor and the three-dimensional coordinate are entered to the video analysis unit 120 in a chronological order. The ID number is necessary to identify the object.

The following is an explanation for a method to identify at what position the object is displayed in the video (on the screen) with using the information from the position censor and the position information of the camera.

At first, the three dimensional position coordinate of the position censor in the global coordinate system is converted to the expression in the camera coordinate system. If ,a matrix to convert the global coordinate system to the camera coordinate system for the i-th camera is regarded as $M_{vi}$, and if an output of the position censor in the global coordinate system is $v_w$, "$v_c = M_{vi} \cdot v_w$" is to get the output (coordinate) $v_c$ of the position censor in the camera coordinate system. Here, " $\cdot$ " is expressed for a multiplication of the matrix and the vector. If this formula is expressed using elements of the matrix and the vector, it is as follows:

$$\begin{bmatrix} xc \\ yc \\ zc \end{bmatrix} = \begin{bmatrix} Mv_{11} & Mv_{12} & Mv_{13} \\ Mv_{21} & Mv_{22} & Mv_{23} \\ Mv_{31} & Mv_{32} & Mv_{33} \end{bmatrix} \cdot \begin{bmatrix} xw \\ yw \\ zw \end{bmatrix}$$

$$\parallel \qquad\qquad \parallel \qquad\qquad \parallel$$

$$vc \qquad\qquad Mvi \qquad\qquad vw$$

Next a projection conversion is used to get a two-dimensional coordinate of the position censor in the camera projection surface. According to Fig.3B showing Fig.3A viewed from an upper side along with the projection surface and Fig.3C showing Fig.3A viewed from a lateral direction along with the projection surface, the coordinate in the projection surface vp=(xp, yp) is xp=xc/(zc/d), yp=yc/(zc/d). And the given xp and yp are verified to be located within the projection surface (the screen) of the camera or not. If they are located, the coordinate is acquired as a display position. If the above process is executed for all of the cameras and objects, what object is currently displayed at which position in each camerea is decided.

2. The method for using the video process

In the method using the video process, the detail information is extracted only from the video taken by the camera without using the position censor. Therefore, the camera does not need to be fixed like the case of using the measuring instrument. In order to identify an object from the video, it is necessary to extract the object only from the video, and the object needs to be identified. A way to extract the object from the video is not especially limited. In the above example of relay broadcasting of a sport event, since its background is often to be in a single color (for example, in the case of relay broadcasting of a football game or an American football game, its background is usually in a color of the lawn), it is possible to separate the object from the background by using the color information. The below describes a technique to identify plural objects extracted from the video.

(1) Template matching

A large number of template videos are prepared for individual players. The object separated from the background is matched with the template video and the player is identified from the video considered to be most appropriate. To be more specific, a certain player contained in the video is chosen, and the minimum rectangular surrounding the player (hereinafter referred to as "target rectangular") is obtained. Next, down-sampling is executed if a certain template (considered to be a rectangular) is bigger than the target rectangular, and up-sampling is executed if it is smaller than the target rectangular, so that the size of the rectangular is adjusted. Then, a difference between a pixel value at a position of the target rectangular and a pixel value at the same position in the template video is found. The above process is executed for all pixels, and its total sum S is calculated. The above process for all template videos is executed, and the player in the template video whose S is the smallest is regarded to be the player targeted for the identification.

(2) Motion prediction

Because the player's motion in the video for the relay broadcasting of sport events is consecutive and is not changed radically between the frames. Additionally, since a moving direction and moving speed are limited, the player's position in the next frame can be predicted to some extend, as long as the position of the player in the present frame is known. Therefore, a range of values taken as the position of the player in the next frame is predicted from the player's position in the current frame, and a template matching can be applied only for the range. Also, because the positional relationship between the target player and other players around him is not radically changed, it can be used as information for the motion prediction. For example, if the position of one player, who was taken next to the target player in the previous frame of the video, is known in the current frame, the target player to be identified is most likely to be close to the player. Therefore, the target player's position in the current frame is predictable.

(3) Use of pre-acquired information

In many cases of relay broadcasting of the sport events, a color of a uniform worn by a team is different from the one worn by its opponent. Because the color of the uniform can be obtained in advance, it is possible to identify the team with the color information. Additionally, since a player's number is provided on the uniform, which is not duplicated among the players, it is very effective to identify individual players.

Identification of the object and acquisition of the position where the object is displayed are achieved by a combination of the above methods. For example, the team can be identified by matching the color information of the object with the color information of the uniform. Next, a large number of template videos only containing the extracted players' numbers are made available, and the players' numbers can be identified by a template matching. The identification process is completed for those players whose number is identified. However, for those players who are not identified, their motions are predicted by using the video in the previous frame and a positional relationship with the surrounding players whose identification is completed. The template matching is executed for the prediction range with using the video of the player's whole body as a template video. The position is specified at the upper left and the lower right positions of the target rectangular in directions of horizontal and vertical scanning.

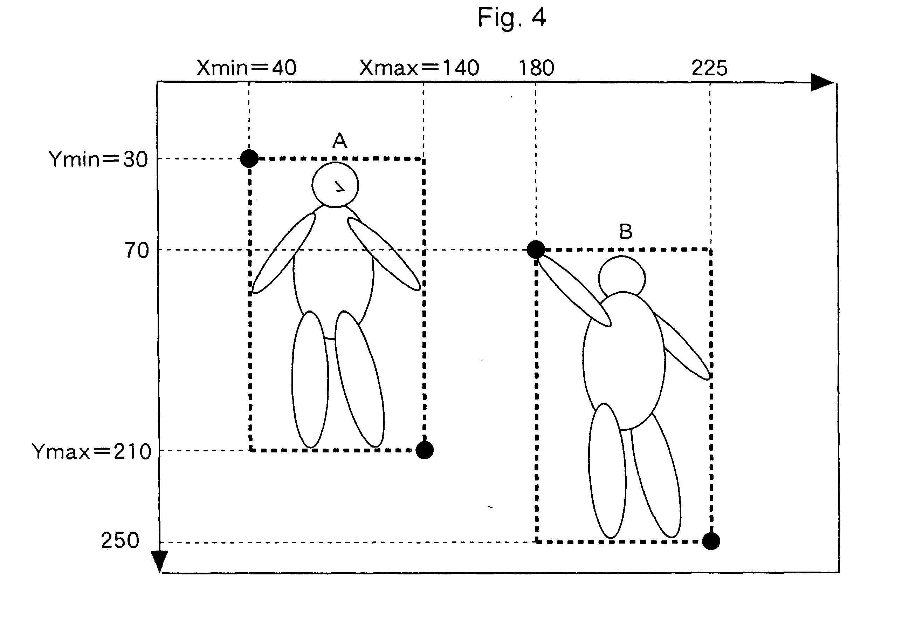

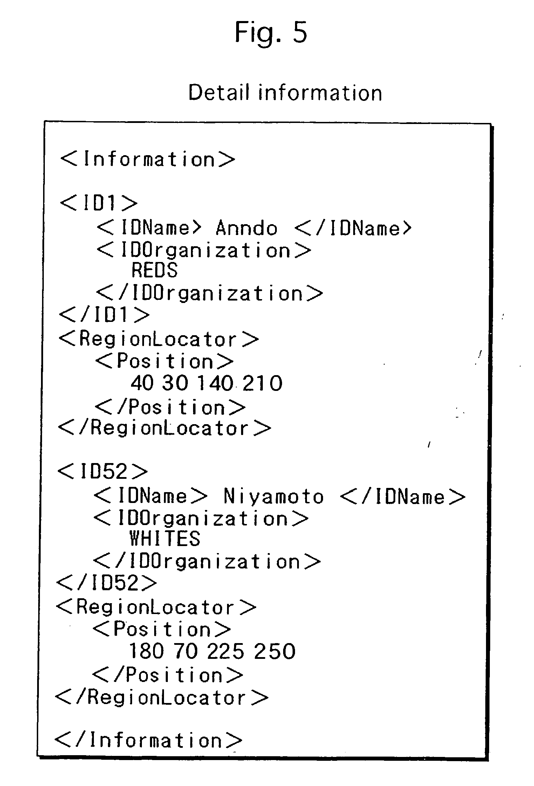

Next, the below explains description of the detail information acquired. A description format of the multimedia content such as MPEG-7 is used for the description of the detail information. In the present embodiment, the player's name and his display position in the video extracted through the above procedure are described as the detail information. For example, if there are two players, A (for example, Anndo) and B (for example, Niyamoto) in the video as shown in Fig. 4, a sample of the description format of the detail information is as indicated in Fig. 5.

<Information> in this diagram is a descriptor (tag) to indicate a beginning and an ending of the detail information. <ID> is a descriptor to identify an individual player, which contains an <IDName> descriptor to identify the player's name and an <IDOrganization> descriptor to identify where the player belongs to. A <RegionLocator> descriptor indicates the position where the player is indicated in the video, which is acquired by the above method. The values between <Position> descriptors in the <RegionLocator> descriptor respectively indicate the X coordinate and the Y coordinate on the upper left side and the X coordinate and the Y coordinate on the lower right of the rectangular that contains the player. It is possible to acquire the rectangular containing the player with the method using the video process, however it is impossible only with the method using the measuring instrument (the position censor, GPS). Therefore, when the measuring instrument is only used, both of the upper left and the below right coordinates are described by the same value, which means the coordinate position is described for a single point. The video analysis unit 120 generates each of the above detail information for all of the videos entered from plural camera sets. Also, because the detail information is generated for each frame, a-relationship of the video and the detail information is 1 to 1.

Next, the video matching unit 130, the video information distribution unit 160 and the video output unit 220 of the video receiving device 20 are explained. Although the viewer is able to view the video transmitted to the video output unit 220 via the video information distribution unit 160, it is also possible for him to conversely notify his preference information to the video matching unit 130. In the case of relay broadcasting of sport events, the main objects in the video are the players who play in the game and which players play the game are decided in advance. Therefore, in the present embodiment, the object for which preference level can be set is supposed to be the players in the game.

Once each of the detail information is generated by the video analysis unit 120, the video matching unit 130 stores multi-perspective videos and their detail information related to the live content to the content database 141 (S13).

Then, after the video matching unit 130 generates the preference value entry dialogue 146 from the template video, the player's name and number used in the above template matching method, and stores it in the preference database 145, the video matching unit 130 reads out the mode selection dialogue 142 to select either of the live mode or the storage mode from the content database 141, and sends it (S14). When the user of the video receiving device 20 designates either of the modes by clicking a switch button of the mode selection dialogue 142 with a mouse, etc. of the operation unit 210 (S15), mode designation information that shows which mode is specified is sent from the video receiving device 20 to the video distribution device 10 (S16).

When the mode designation information is received, the video matching unit 130 reads out a content list 143 of the mode specified by the user from the content database 141 and sends it to the video receiving unit 20 (S17), and shifts a switch (not shown in the diagram) to a designated side, which is for switching distribution for the live content to distribution for the storage content stored in the video recording unit 140 and vice versa.

When the user of the video receiving device 20 designates the content by clicking on the desired content with a mouse, etc. of the operation unit 210, the content name specified by the user is sent from the video receiving device 20 to the video distribution device 10 (S18).

When the content is specified, the video matching unit 130 reads out the preference value entry dialogue 146, which is a table to set preference information for the content specified based on the detail information, from the preference database 145, and sends it with an edit program, etc. to the video receiving device 20 (S19). This preference value entry dialogue 146, which consists, for example, of an edit video, scripts (the name and the number, etc.), is generated by the video matching unit 130 based on the template video, the name and the number, etc. used in the template matching method, and is stored in the preference database 145 of the video recording unit 140. Although this preference value entry dialogue 146 may be sent in a middle of relay broadcasting of the live content, it is preferable to be sent before a start of the relay broadcasting. Because the video would be met better with the preference if the video is selected with the latest preference information at an earliest opportunity. Until the latest preference information is acquired, there is no way other than selecting the video with, for example, the preference history acquired at the last game of the same card, which is stored in the preference history table 147.

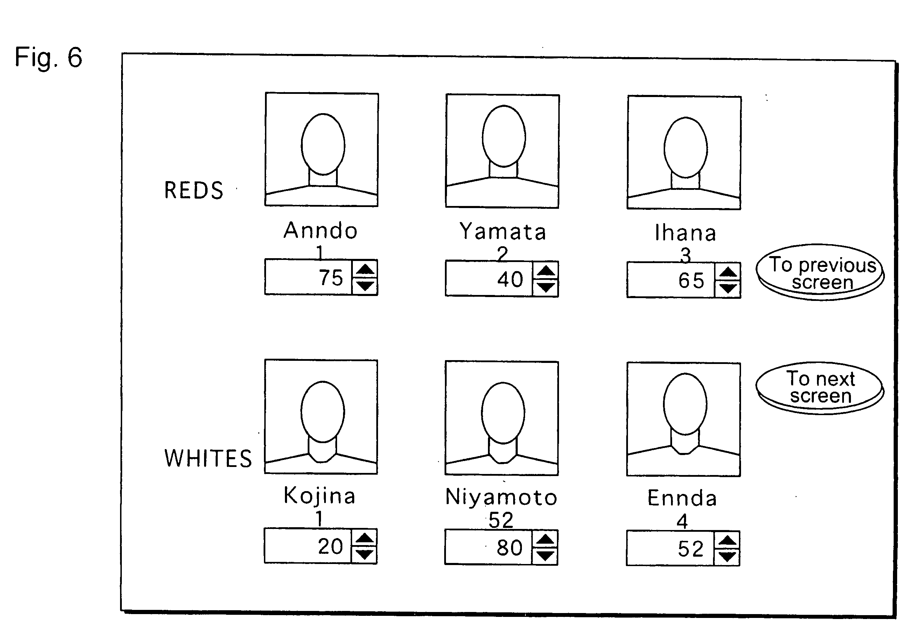

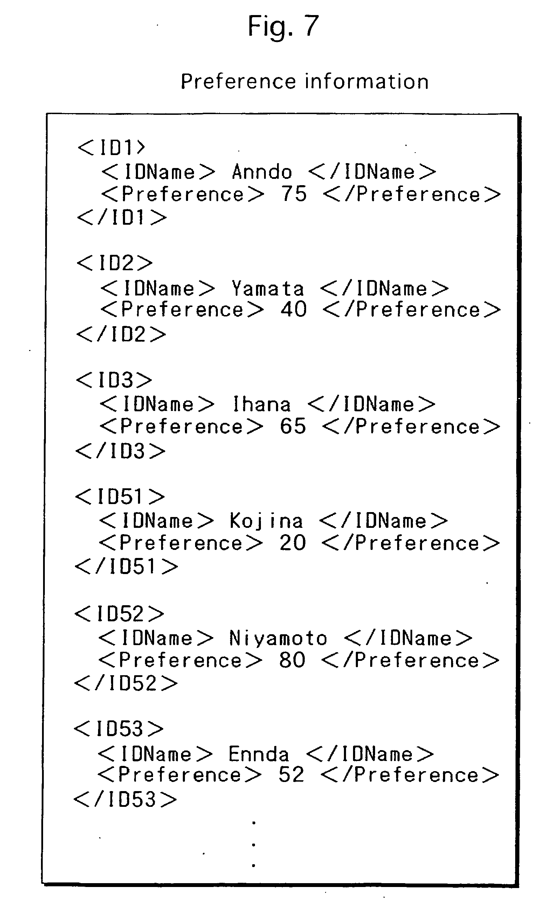

Fig. 6 shows an example of GUI interface of the preference value entry dialogue 146. The interface in Fig. 6 is composed of "a face picture", "the name", "the number" of the player played in the game and "an edit box" (spin box) to enter the preference level. The viewer puts the cursor on the edit box for the player to decide the preference level and enters his preference level with using a device such as a keyboard or a remote controller of the operation unit 210. Or the preference level may be decided by placing the cursor on an up-down arrow icon next to the edit box and moving the preference level up and down. In the present embodiment, the preference level "0" shows the least preference and the preference level "100" shows the most preference. Although an absolute assessment is applied to the above method, a relative assessment to put ranking to the players in the game may be applied. The preference information acquired by the above method is sent to the video distribution device 10 (S20). Fig. 7 shows an example of the preference information. The preference information shown in this diagram is described in the description format of the multimedia content such as MPEG-7 in the same way as the detail information, which includes an <ID> descriptor to identify an individual player, and this descriptor further includes an <IDName> descriptor to identify the player's name and a <Preference> descriptor to identify the preference level. This preference information is notified to the video matching unit 130 via the video information distribution unit 160, and updated and recorded in the preference history table 147 (S21).

When the preference information is acquired, the video matching unit 130 executes a matching process to decide which video should be distributed to the viewer based on plural videos attached with the detail information generated by the video analysis unit 120 and the preference information notified from the viewer and its history (S22). The below provides a detailed explanation of two methods for the matching process (one method to decide with the most preferred object, another method to decide comprehensively from individual preference levels):

1. The method to decide with the most preferred object

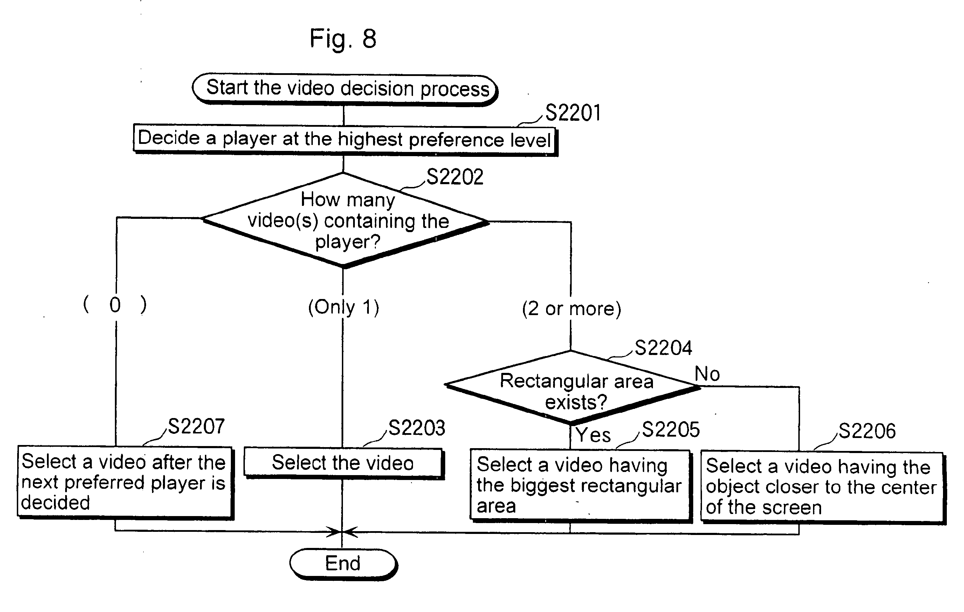

When the video of the most preferred player is distributed, for example, follow a procedure in the flow chart shown in Fig. 8.

(1) Analyze the preference information notified from the viewer, and decide the most preferred player (hereinafter also referred to as a player subject for distribution) (S2201).
(2) Analyze the detail information transmitted from the video analysis unit, and confirm the number of videos containing the player (S2202). Choose the video containing the player subject for distribution decided by (1) in the videos taken from multiple perspectives and regard the video as a candidate is limited to one, select the video taken from the camera (S2203) and distribute this video to the viewer.
(3) If the player subject for distribution appears in plural videos, the video considered to be the most suitable among them is distributed. However its decision method is not especially limited.

For example, if the rectangular information is acquired by the <RegionLocator> descriptor of the detail information (Yes in S2204), calculate the size of the rectangular containing the player subject for distribution, then choose the video having the biggest rectangular (S2205), and distribute the video.

If the rectangular information is not acquired (No in S2204), a method can be considered to acquire the position where the player subject for distribution is indicated, and select the video where the position of the player is closest to the center on the screen (S2206). If there is no (0) video of the player subject for distribution, choose the next preferred player. Execute processes from Steps S2202 to S2206 for this player so that the video to be distributed can be decided (S2207).

2. The method to decide comprehensively from individual preference levels

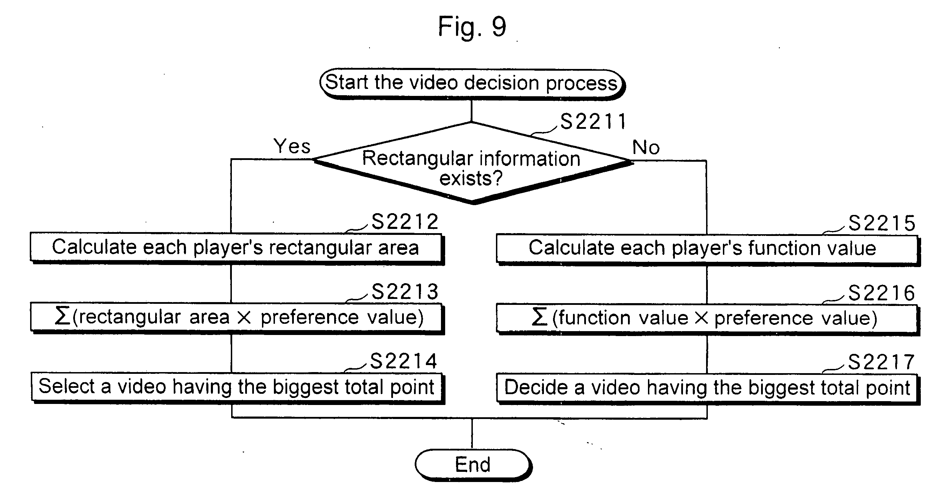

When the video to be distributed is decided through a comprehensive judgement based on the preference level of individual players, for example, follow the procedure of the flow chart shown in Fig. 9.

(1) For the videos from all of the cameras, verify whether or not the rectangular information is acquired by the <RegionLocator> descriptor of the detail information (S2211). If the rectangular information is acquired (Yes in S2211), calculate the size of the rectangular containing each player (S2212). If the rectangular information is not acquired (No in S2211), stipulate a function to take the maximum value in the center of the screen and the minimum value at the edge of the screen (for example, $f(x,y) = \sin(\pi \cdot x/(2 \cdot x\_mid)) \cdot \sin(\pi \cdot y/(2 \cdot y\_mid))$ satisfies the above condition, provided that x and y show a pixel position, x_mid and y_mid are a coordinate for the center of the screen, and * shows multiplication.), and then enter the position of each player to get the result of the function (S2215).

(2) Multiply the value resulted in (1) by the corresponding player's preference level. Additionally take a total sum of the value of the player displayed on the screen, and treat it as an objective function value for the concerned video (S2213, S2216).

(3) Decide the video taken from the perspective having the biggest value in (2) as the video to be distributed (S2213, S2216).

Here, if the above process is executed per frame, it is possible that the videos are frequently switched one after another. Therefore, apply the above method in every several frames in the video unit 130 and decide the video distributed to the viewer.

Once the video is decided as above, the video matching unit 130 executes stream distribution for the decided video (S23 in Fig. 2). Then the video output unit 220 of the video receiving device 20 reproduces the video distributed via the send/receive unit 230 on its screen (S24 in Fig. 2)

As mentioned above, according to the video distribution system 1 related to the embodiment 1, the video met with each user's preference is selected for every several frames from multi-perspective videos in the video distribution device 10, distributed to the video receiving device 20, and reproduced in the video output unit 220 of the video receiving device 20.

Subsequently, the viewer is able to acquire the additional information by working on the video distributed (Steps S25~S29 in Fig. 2). The below explains how to acquire the additional information by using, for example, a pointing device like a mouse of the operation unit 210.

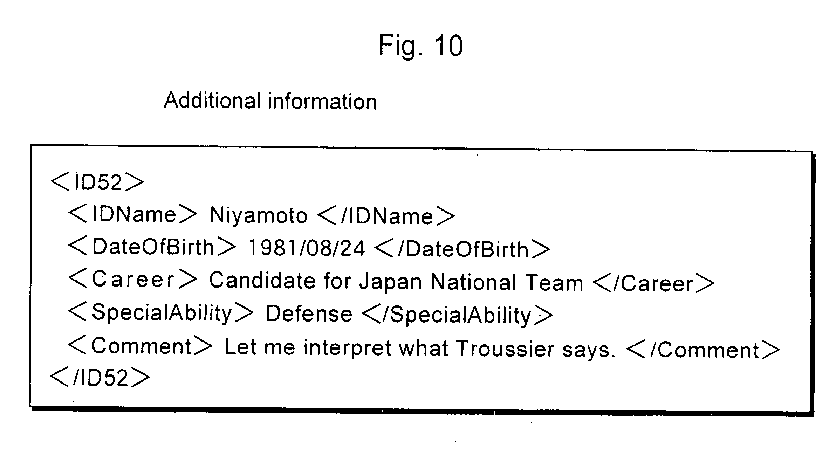

For example, Fig. 4 shows a situation where two players, A and B are contained in the video. For example, if the additional information of the player B (Niyamoto) is to be acquired, the user clicks a cursor of the pointing device on B (S25 in Fig. 2). When clicked, the position information on the screen is notified to the video matching unit 130 via the video information distribution unit 160 of the video distribution device 10 (S26 in Fig. 2). Then the video matching unit 130 specifies which target is selected from the detail information assigned to the distributed video, and notifies its result to the additional information providing unit 150 (S27 in Fig. 2). For example, when the objects shown in Fig. 4 are displayed and the position of the right side object is clicked, the video matching unit 130 notifies only Niyamoto based on the detail information shown in Fig. 5. The additional information providing unit 150 reads out the additional information of Niyamoto as the selected target from the attachment information table 151, and sends the additional information to the video output unit 220 of the video receiving device 20 via the video matching unit 130 and the video information distribution unit 160 (S28 in Fig. 2). As indicated in Fig. 10, this additional information is described with the descriptor according to the above MPEG7. It contains an <ID> descriptor to identify an individual player, and this descriptor further contains an <IDName> descriptor to identify the player's name, a <DateOfBirth> descriptor to show a birthday, a <Career> descriptor to show the main career history, a <SpecialAbility> descriptor to show a character, and a <Comment> descriptor to show a comment of the player.

When there is no related information recorded for the selected target, a message showing the information does not exist is sent.

Lastly, the video output unit 220 reproduces the additional information distributed via the send/receive unit 230 on its screen (S29 in Fig. 2).

According to the video distribution system 1 related to the first embodiment as mentioned above, the viewer is not only able to view the video met with his preference from the videos taken from multiple perspectives, but also he is able to acquire information (additional information) related to the target he is interested in by working on the distributed video.

(The Second Embodiment)

Next, the video distribution system according to the second embodiment of the present invention is explained based on diagrams. Also, in the explanation of the second embodiment, the video mainly focusing on the players in the case of relay broadcasting of some sport event like a football game is used as an example for a shooting object in limited space. However, the present invention is applicable to any discretional shooting space and shooting object.

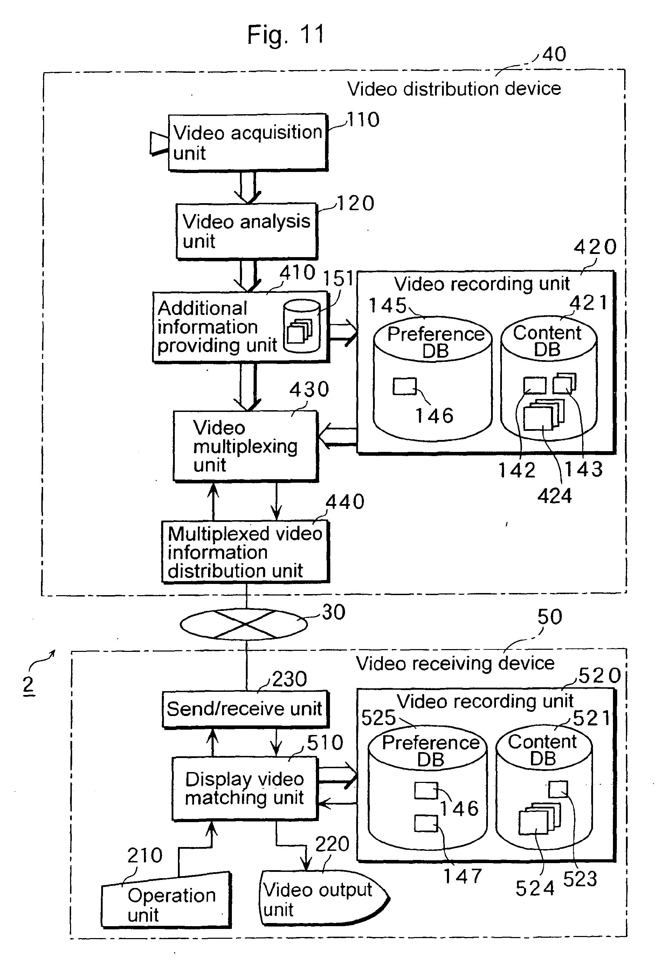

Fig. 11 is a block diagram to show a functional structure of a video distribution system 2 according to the second embodiment of the present invention. The same reference numbers are assigned to those functional structures corresponding to the video distribution system 1 in the first embodiment, their detail explanation is omitted.

This video distribution system 2 is composed of a video distribution device 40, a video receiving device 50 and a communication network 30 connecting these, which is the same as the video distribution system of the first embodiment in respect of being a system that reproduces a video met with the user's preference from the multi-perspective videos. However, a different point between them is as follows. In the first embodiment, the video distribution device 10 decides a content of the video, etc. according to the user's preference and executes stream distribution for it. By contrast, the video distribution device 40 in the second embodiment executes the stream distribution for all of the contents, etc. (all of the contents that might be selected) of the multi-perspective videos, and then the video receiving device 50 selects and reproduces a video, etc. according to the user's preference.

The video distribution device 40 of this video distribution system 2 is a distribution server consisting of a computer, etc. that executes the stream distribution of the video contents, etc. of multiple videos (multi-perspective videos) attached with the detail information and the additional information to a video receiving device 50, which contains a video acquisition unit 110, a video analysis unit 120, an additional information providing unit 410, a video recording unit 420, a video multiplex unit 430 and multiplex video information distribution unit 440.

The additional information providing unit 410 searches the detail information generated by the video analysis unit 120, generates the additional information of an object (a target) contained in the detail information based on an attachment information table 151, stores the video attached with the detail information and the additional information in a content database 421 of the video recording unit 420, and generate and stores a preference value entry dialogue 146 in a preference database 145.

The video recording unit 420, of which input side is connected to the additional information providing unit 410 and output side is connected to the video multiplex unit 430, is internally equipped with the content database 421 and the preference database 145. A video content 424 itself attached with the detail information and the additional information is stored in the content database 421. The preference history table 147 is deleted from the preference database 145. This is because the preference history table 147 is not required to be held in the video distribution device 40 since the video corresponding to the user's preference is selected in the video receiving device 50.

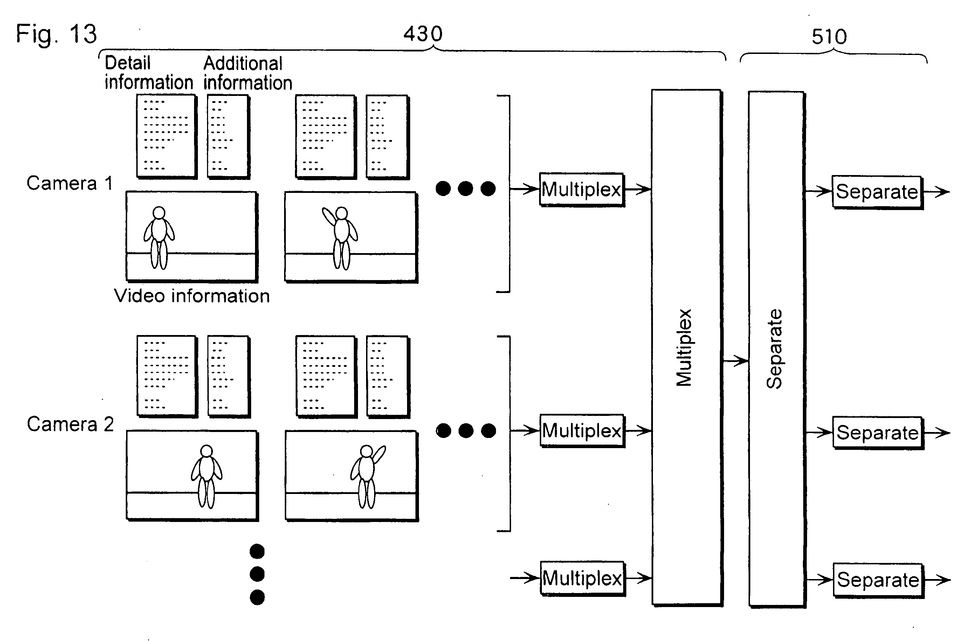

According to a mode specified by the user, the video multiplex unit 430 selects the multi-perspective live videos attached with the detail information and the additional information that are output from the additional information providing unit 410 and the storage video content 424 stored in the content database 421. Then, the video multiplex unit 430 multiplexes the video, the detail information and the additional information by each camera, and generates one bit stream by further multiplexing these information (See Fig. 13). Also, the video multiplex unit 430 executes the stream distribution of the preference value entry dialogue 146 to the video receiving device 50.

The multiplex video information distribution unit 440 is an interactive communication interface and driver software, etc. to communicate with the video receiving device 50 via the communication network 30.

The video receiving device 50 is a personal computer, a mobile telephone device, a portable information terminal, a digital broadcasting TV, etc., which communicates with the user for a mode selection of live or storage and the entry of the preference value, etc., separates the video, the detail information and the additional information that are sent through the stream distribution from the video distribution device 40, and constructs the video content in a real time manner through the compilation process such as selecting and switching over a video to another among multiple videos (multi-perspective videos) for every several frames according to the user's preference and the preference history, and offers it to the user. The video receiving device 50 consists of an operation unit 210, a video output unit 220, a send/receive unit 230, a display video matching unit 510 and a video recording unit 520.

The display video matching unit 510 separates the video, the detail information and the additional information sent through the stream distribution from the video distribution device 40 by each camera (See Fig. 13), stores these to the video recording unit 520, stores the preference value entry dialogue 146 distributed from the video distribution device 40 to the video recording unit 520, compares the user's preference, etc. sent from the operation unit 210 with the detail information of each video sent from the video distribution unit 40, and constructs the video content in a real time manner through the compilation process such as selecting and switching over the video from multiple videos (multi-perspective videos) for every several frames according to the user's preference and the preference history.

The video recording unit 520 is a hard disk, etc. keeping a content database 521 that holds a live or storage content distributed from the video distribution device 40 and a preference database 525 that acquires preference by each user. The content database 521 memorizes a list of contents 523 for the held storage contents and the contents 524. Also, the preference database 525 memorizes the preference value entry dialogue 146 by each content sent from the video distribution device 40 and the preference history table 147 storing the preference history entered by the user.

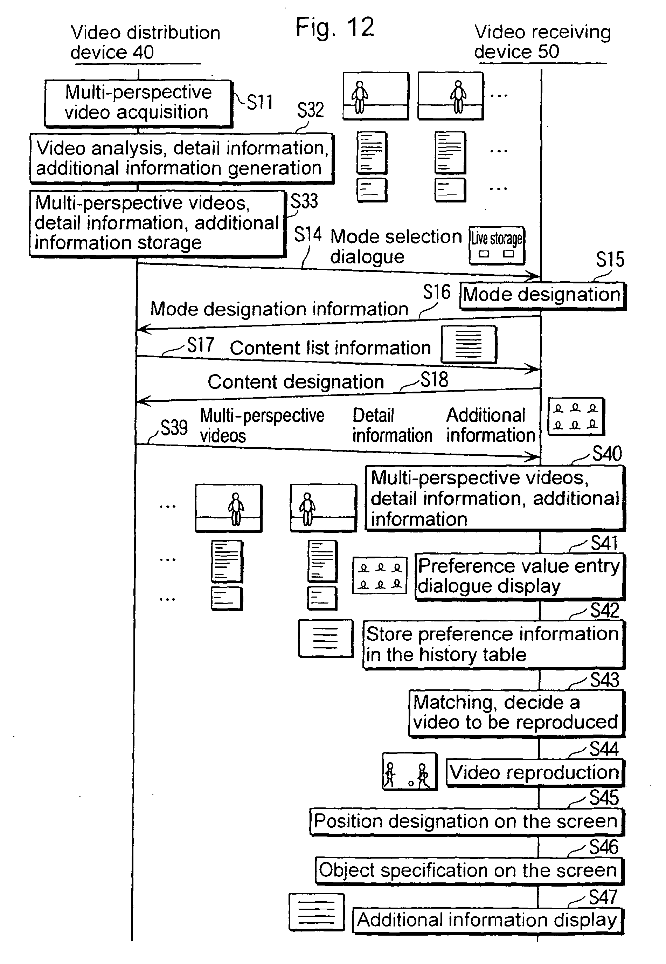

Actions in the video distribution system 2 of the present embodiment structured as above are explained in order according a sequence (a flow of main processes in the present system) shown in Fig. 12. The sequence of this diagram also shows a flow of processes for the multi-perspective videos at a certain point of time so that any detailed explanation regarding processes corresponding to the sequence explained in the first embodiment is omitted.

Once the acquirement of multiple videos (multi-perspective videos) is completed by the video acquisition unit 110 (S11), the video analysis unit 120 analyzes the multi-perspective videos, generates the detail information by each video. The additional information providing unit 410 searches the detail information, and generates the additional information of the object contained in the detail information (S32). For example, if there are 2 people, A and B taken in the video, the additional information of these 2, A and B are generated. When the additional information is generated, the additional information providing unit 410 stores the video attached with the detail information and the additional information to the content database 421 of the video recording unit 420 (S33).

In the same way as the first embodiment, transmission of mode selection dialogue (S14), a mode designation in the video receiving device 50 (S15), transmission of mode selection information (S16), transmission of the content list information (S17) and transmission of content designation (S18) are sequentially conducted.

Once the content is specified, the video multiplex unit 430 multiplexes the multi-perspective videos (multiple videos) of the live or storage content specified, the detail information by each video and the additional information by each video and sends them (S39). Then, the video multiplex unit 430 sends the preference value entry dialogue 146 of this content.

The display video matching unit 510 separates the multi-perspective videos, the detail information per video and the additional information per video sent from the video distribution device 40 based on each camera, stores them in the content database 521 (S40) and further stores the preference value entry dialogue 146 in the preference database 525.

The display video matching unit 510 reads out the preference value entry dialogue 146 from the preference database 525 and sends it to the video output unit 220 to be displayed (S41). After the display video matching unit 510 stores the preference information entered by the user to the preference history table 147 (S42), it compares the preference information with the detail information, and decides a video from a perspective met with the user's preference from the multi-perspective videos (S43). A decision method of this video is the same as one of the first embodiment. Then, the display video matching unit 510 sends the decided video to the video output unit 220 to be reproduced on its screen (S44).

As mentioned as above, in the video distribution system 2 related to the second embodiment, the video distribution device 40 preliminary sends multiple videos (multi-perspective videos) to the video receiving device 50, and one video met with the user's preference is selected and decided from the multi-perspective videos, and reproduced for every several frames in the video receiving device 50.

Subsequently, the user is able to acquire the additional information by working on the distributed video (Steps S45~S47 in Fig. 12).

For example, in a situation where the video met with the user's preference is reproduced and an object to acquire the additional information for the distributed video is displayed, if the user clicks a cursor of the pointing device in the operation unit 210 on the object displayed on the screen, its position information on the screen is notified to the display video matching unit 510 (S45). Then the display video matching unit 510 specifies which object is selected from the detail information assigned to the video (S46), and sends only the specified additional information from the corresponding additional information to the video output unit 220. For example, when the objects A and B indicated in Fig. 4 are displayed and the position of B on the right side is clicked, the display video matching unit 510 at first specifies Niyamoto based on the content information indicated in Fig. 5. Then, the display video matching unit 510 reads out the additional information only related to Niyamoto from the additional information of the two players, and sends it to the video output unit 220. By doing so, the additional information only for the object to be acquired is displayed in the video output unit 220 (S47).

According to the multi-perspective video distribution system 2 related to the second embodiment, the viewer is not only able to view the video met with his preference from the videos taken from multiple perspectives, but also he is able to acquire the information (additional information) related to the object he is interested in by working on the distributed video.

By the way, the content database 521 of the video recording unit 520 stores the content 524 with a set of multi-perspective videos sent from the video distribution device 40, the detail information for each video and the additional information for each video. Therefore, this content can be reproduced repeatedly in the video receiving device 50 without having it re-distributed from the video distribution device 40.

Also, at the time of repeating reproduction, the display video matching unit 510 reads out the preference value entry dialogue 146 from the preference database 525 of the video recording unit 520, can reproduce a video from the videos taken from multiple perspectives, which is met with the preference information different from the last preference entered by the user. In this case, the user can view a video compiled differently from the last time, which mainly focuses on a different object (player).

Although the video distribution system related to the present invention has been explained as above based on the embodiments, the present invention is not limited to these embodiments. It may also be applied to following variations.

In the above embodiments, the preference value entry dialogue 146 is displayed to acquire the preference information of the viewer every time the video content is distributed. However, rather than executing such a process at that timing, it is also possible to select one video from multi-perspective videos with use of the preference history. For example, the viewer's preference information, etc. acquired in the past may be stored in the video distribution device 40. Referring to the information can reduce one step to acquire the viewer's preference information at the time of each distribution of the video content.

Also, in the first embodiment, the additional information providing unit 150 sends the additional information from the video distribution device 10 to the video receiving device 20 only in the case the position is specified by the video receiving device 20. However, the additional information for the video being distributed may be pre-distributed with the video content before receiving the specification from the viewer. By doing so, it reduces time taken from the viewer's specification to his acquirement of the additional information so that the video distribution system with quick responses can be realized.

Furthermore, contrary to this, though the additional information providing unit 410 in the second embodiment, attaches the additional information to each of the multi-perspective videos, the additional information may be distributed only in the case the position is specified in the video receiving device 50. By doing so, a load of transmission processes imposed on the communication network 30, which is caused by the additional information being distributed for the video contents that may or may not be selected at the end, is lightened.

In the first and the second embodiments, relay broadcasting of the live football game is used as an example for their explanation. However, the invention can be, of course, applicable to relay broadcasting of any live outdoor sport event such as a baseball, or relay broadcasting of an indoor event such as a live concert, a play, etc.

Furthermore, in the above first and the second embodiments, the size and the position per object in the video are regarded as the subject for assessment of the video selection besides the viewer's preference, a motion of the object may also added to the subject for this assessment.

In short, in the case of relay broadcasting of an indoor event, a motion capture system may be installed in its live facilities and motions of the object (e.g. a singer) may be detected by the system even if the object actively moves around on a stage. On the other hand, as a part of stage effects, there is a case a leading person (a person who gets attention) is switched one after another in a real time manner among multiple objects on the live stage. In such a case, the viewer mentally tends to prefer watching the person running around (i.e. the person actively making performance) on the stage to watching the other staying still, and that is to meet with the viewer's performance. Therefore, the video analysis unit 120 may analyze the momentum of the object taken in the video, which is acquired by the motion capture system device, include the momentum into the detail information, and may select the video of the object in active motion since it is rated as high in attention and interest levels.

(The Third Embodiment)

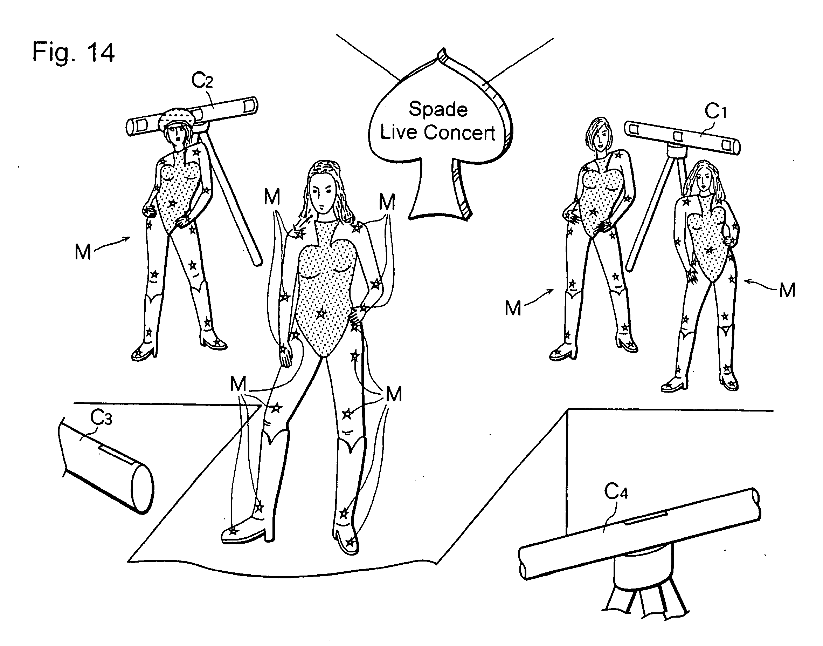

Fig. 14 is a diagram to show a live concert stage of a group called "Spade".

As shown in this diagram, plural sets (4 sets in the diagram) of cameras C1~C4 are set and fixed. Multiple markers M are stuck on each member's body (From left, Furugaki, Shimohara, Maei, and Rikubukuro of Spade in Fig. 14).

Each camera C1~C4 acquires pictures in each color, R, G and B, which is equipped with a luminous unit that emits infrared light and a light receptive unit that receives the infrared light reflected by the marker M. Each camera C1~C4 is structured to get the video reflected by the marker based on a frame through the light receptive unit. The marker video based on a frame is sent, for example, to the video analysis unit 120 shown in Fig. 1 and the momentum of the corresponding object is analyzed.

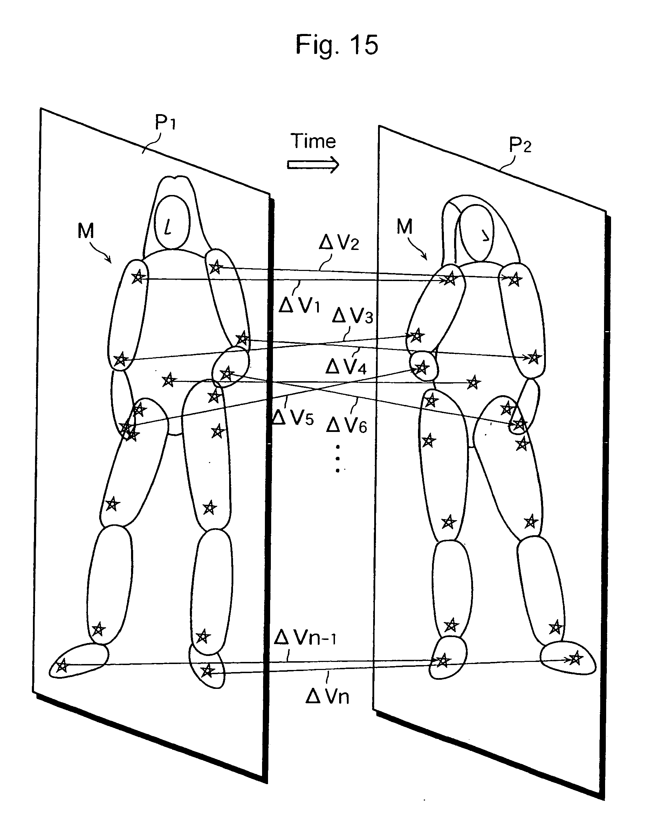

Fig. 15 is a diagram to show how the momentum is analyzed from 2 marker videos (P1, P2). The diagram here indicates the case the momentum is analyzed from 2 marker videos only taking one of the members, Shimohara in Fig. 14.

The video analysis unit 120 compares the 2 marker videos, P1 and P2 in terms of each marker M. The momentum of each part such as her shoulder, elbow, wrist,...toe, which is $\Delta v1$, $\Delta v2$, $\Delta v3$, $\Delta v4$, ... $\Delta v(n-1)$, $\Delta vn$, is respectively measured. Then, once the measurement for each part is completed, the video analysis unit 120 calculates a total sum of these measurement values. This calculation result is acquired as the momentum of the singer, the object displayed in the video at that point. Then, the acquired momentum is included in the detail information. This momentum may be calculated in order, such as starting from her waist and shoulder set as a standard, then to her arm and wrist, etc. Also, the marker videos M taken from multiple perspectives may be combined to measure a three-dimensional the motion vector. In this case, even if the markers are duplicated in one marker video M, each marker can be distinguished to get the accurate momentum so that any miscalculation of the momentum can be avoided.

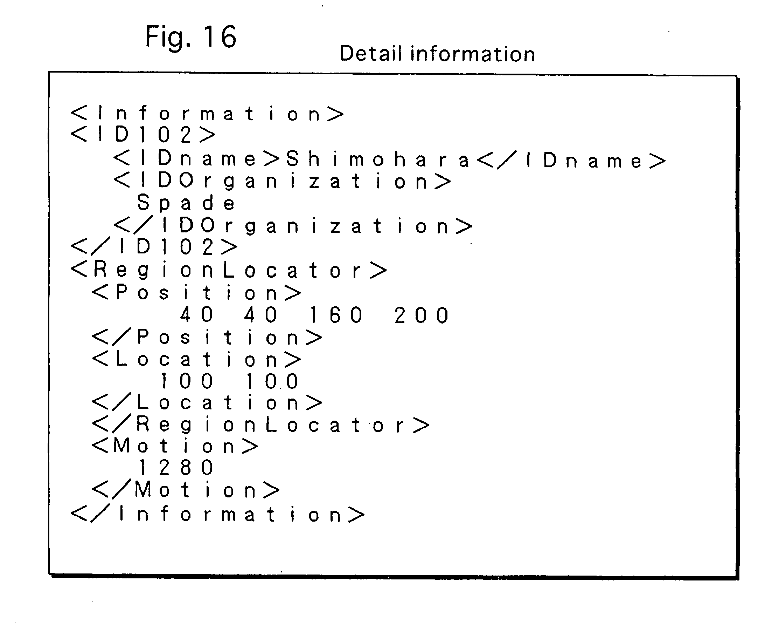

Fig. 16 is a diagram to show an example of the detail information generated by the video analysis unit 120.

In this example, <Position> as a position containing the size of the singer displayed in the video, and <Location> as a location of a point not containing the size acquired by the measuring instrument (the position censor, GPS) are both described with the <RegionLocator> descriptor, which makes it possible to do the assessment on an object basis for its size and position (e.g. in the center) on the screen.

Additionally, it is also possible in this content information to make the assessment on an object basis for its momentum with the <motion> descriptor.

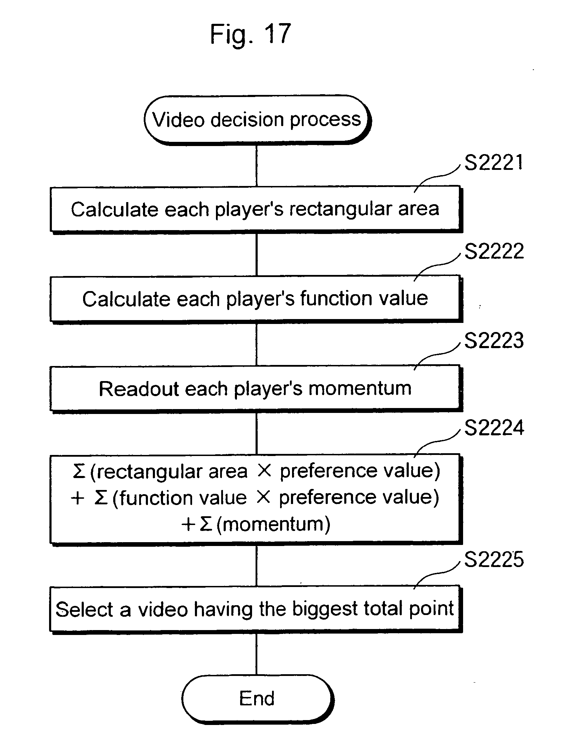

As mentioned above, if the detail information is structured to include the object's momentum in addition to the size and the position, each object is assessed per object based on its size, position and motion, etc. on the screen besides the preference level of each singer. If the video to be distributed is decided through the comprehensive judgement, for example, a sequence of a flowchart in Fig. 17 should be followed.

The video matching unit 130 refers at first to the rectangular information with the <RegionLocator> descriptor of the detail information for the videos from all of the cameras, and calculate the size of the rectangular containing the individual object, i.e. the singer (S2221). Once the calculation of the rectangular size is completed, the video matching unit 130 calculates a function value related to each singer's position by using the function taking the maximum value in the center of the screen and the minimum value at the edge of the screen (for example, $f(x,y) = \sin(\pi *x/(2*x\_mid)) *\sin(\pi *y/(2*y\_mid))$) (S2222). Once the calculation of the function value is completed, the video matching unit 130 refers to the <motion> descriptor of the detail information for the videos from all of the cameras and reads out the momentum (S2223).

Once the size and the function value are calculated and the momentum is read out, the video matching unit 130 calculates a product of the size multiplied by the preference level of the corresponding singer taken in the videos from all of the cameras, calculates a total sum of the values for the singer displayed on the screen, calculates a product for the position multiplied by the preference level of the singer corresponding to the position, calculates a total sum of values for the singer displayed on the screen, then calculates a total sum of the values for the momentum of the singer displayed on the screen to get a objective function value (S2224).

Then, once the objective function value is found out for the video from all of the cameras, a video from the perspective with the biggest objective function value is decided to be distributed (S2225).

In such a way to include the momentum in the assessment value, the video of the singer in active motion is rated higher evaluated than the singer in less motion, and the video rated higher is selected for every several frames. As a result of this, the video met with each user's preference in the multi-perspective videos in the video distribution device 10 is distributed.

**Claims**

1. A video distribution device (10) operable to distribute a video via a communication network (30) comprising:

   a video acquisition unit (110) operable to acquire plural videos taken from various perspectives, and **characterized in that** it further comprises:

   a video analysis unit (120) operable to analyze details of each of the frames included in each of the videos and generate detail information, for each of the frames included in each of the videos, indicating what is shot as an object in the frame; and
   a video matching unit (130) operable to verify a conformity level of each of the frames included in each of the videos with a viewer's preference based on each of the detail information and preference information notified from the viewer, select, one by one, frames with a highest conformity level, edit the selected frames by connecting the selected frames, and distribute a video obtained by editing the selected frames.

2. The video distribution device according to claim 1, wherein
   the preference information includes information indicating a preference level of the viewer for an object, and
   the video analysis unit generates the detail information containing information that specifies the object to be displayed on a screen.

3. The video distribution device according to claim 2, wherein
   the video analysis unit generates the detail information containing information that indicates a position or an area on the screen where the object is displayed, and
   the video matching unit decides a frame to be selected based on the position or the area on the screen where the object with the highest preference level is displayed.

4. The video distribution device according to claim 3, wherein the video matching unit selects a frame displaying the object as close as possible to a center of the screen.

5. The video distribution device according to claim 3, wherein the video matching unit selects a frame displaying the object as big as possible on the screen.

6. The video distribution device according to claim 1, wherein
   the video analysis unit describes the detail information with a predefined descriptor, and
   the video matching unit decides a frame to be selected based on the detail information described with the descriptor.

**7.** The video distribution device according to claim 1, wherein
the video distribution device further includes a measurement unit operable to measure a status of the object contained in the video, and
the video analysis unit generates the detail information based on a result measured by the measurement unit.

**8.** The video distribution device according to claim 7, wherein
the preference information includes a descriptor identifying the object and a descriptor specifying the viewer's preference level quantitatively for each object,
the video analysis unit generates the detail information including information that indicates whether or not the specific object is displayed on the screen based on the result measured by the measurement unit, and
the video matching unit selects the frame displaying the object with the highest preference level based on the preference information.

**9.** The video distribution device according to claim 8, wherein
the video analysis unit generates the detail information based on the result measured by the measurement unit, which includes information indicating the position or the area on the screen where the object with the specific high preference level is displayed, and
the video matching unit selects the frame displaying the object with the highest preference level as close as possible to the center of the screen based on the detail information and the preference information.

**10.** The video distribution device according to claim 1, wherein the video matching unit decides a frame to be selected at predefined intervals based on the preceding detail information generated for the previous frames.

**11.** The video distribution device according to claim 1, wherein
the preference information includes information indicating the viewer's preference level for each of the plural objects,
the video analysis unit generates the detail information including information that specifies each of the plural objects displayed on the screen, and
the video matching unit selects the frame displaying the object with the highest preference level among the plural objects.

**12.** The video distribution device according to claim 11, wherein
the video analysis unit generates the detail information that includes information indicating each momentum of the plural objects, and
the video matching unit specifies the object having the biggest function value that assesses both of the preference level and the momentum among those of the plural objects, and selects the frame displaying the specified object.

**13.** The video distribution device according to claim 12, wherein
the video analysis unit repeats generating the detail information at regular time intervals based on the plural videos acquired by the video acquisition unit, and
the video matching unit repeats, at the regular time intervals, selecting a frame from the frames included in each of the plural videos, based on the detail information generated by the video analysis unit.

**14.** The video distribution device according to claim 11, wherein
the video analysis unit generates the detail information including information that indicates each momentum of the plural objects, and
the video matching unit counts the number of frames displaying the object with the highest preference level among the frames included in each of the plural videos, selects a frame displaying the object with the second highest preference level when the number is 0, selects the frame when the number is 1, and selects one frame decided based on at least one of the display position, the display size and the momentum of the object displayed on the screen when the number is 2 or more.

**15.** The video distribution device according to claim 1, wherein
the video distribution device further includes an additional information memory unit operable to memorize additional information corresponding to each of the frames included in each of the plural videos in advance, and
the video matching unit reads out the additional information corresponding to the frame selected and decided from the frames included in each of the plural videos, and distributes the additional information with the frame concerned.

**16.** A video distribution method for distributing a video via a communication network, including:

a video acquisition step for acquiring plural videos taken from various perspectives;
a video analysis step for analyzing details of each of the frames included in each of the videos and generating detail information, for each of the frames included in each of the videos, indicating what is shot as an object in the frame; and
a video matching step for verifying a conformity level of each of the frames included in each of the videos with a viewer's preference based on each of the detail information and preference information notified from the viewer, selecting, one by one, frames with a highest conformity level, editing the selected frames by connecting the selected frames, and distributing a video obtained by editing the selected frames.

17. A computer program product which, when running on a computer connected to a video distribution device (10) operable to distribute a video via a communication network (30), causes the video distribution device (10) to distribute a video via the communication network (30) according to the video distribution method of claim 16.

18. A video distribution system (1) operable to distribute a video via a communication network (30) comprising a video distribution device (10) according to claim 1 and a video receiving device (20), wherein the video receiving device (20) includes:

a sending unit (230) operable to send the preference information to the video distribution device (10);
a receiving unit (230) operable to receive the video with the highest conformity level distributed from the video distribution device (10); and
a display unit operable to display the received video.

**Patentansprüche**

1. Videobild-Verteilungsvorrichtung (10), die so betreibbar ist, dass sie ein Videobild über ein Kommunikationsnetz (30) verteilt, mit:

einer Videobild-Erfassungseinheit (110), die so betreibbar ist, dass sie mehrere Videobilder, die aus verschiedenen Perspektiven aufgenommen werden, erfasst,

**dadurch gekennzeichnet, dass** sie weiterhin Folgendes aufweist:

eine Videobild-Analyseeinheit (120), die so betreibbar ist, dass sie Details jedes der in den einzelnen Videobildern enthaltenen Frames analysiert und für jedes der in den einzelnen Videobildern enthaltenen Frames Detail-Informationen erzeugt, die angeben, was als Gegenstand in dem Frame aufgenommen wird; und
eine Videobild-Anpassungseinheit (130), die so betreibbar ist, dass sie aufgrund der Detail-Informationen und von von dem Zuschauer mitgeteilten Präferenz-Informationen ein Konformitätsniveau jedes der in den einzelnen Videobildern enthaltenen Frames mit einer Präferenz des Zuschauers verifiziert, nacheinander Frames mit einem höchsten Konformitätsniveau auswählt, die ausgewählten Frames durch Verknüpfen der ausgewählten Frames editiert und ein durch Editieren der ausgewählten Frames erhaltenes Videobild verteilt.

2. Videobild-Verteilungsvorrichtung nach Anspruch 1, **dadurch gekennzeichnet, dass**
die Präferenz-Informationen Informationen enthalten, die ein Präferenzniveau des Zuschauers für einen Gegenstand angeben, und
die Videobild-Analyseeinheit die Detail-Informationen erzeugt, die Informationen enthalten, die den auf einem Bildschirm anzuzeigenden Gegenstand spezifizieren.

3. Videobild-Verteilungsvorrichtung nach Anspruch 2, **dadurch gekennzeichnet, dass**
die Videobild-Analyseeinheit die Detail-Informationen erzeugt, die Informationen enthalten, die eine Position oder einen Bereich auf dem Bildschirm angeben, wo der Gegenstand angezeigt wird, und
die Videobild-Anpassungseinheit aufgrund der Position oder des Bereichs auf dem Bildschirm, wo der Gegenstand mit dem höchsten Präferenzniveau angezeigt wird, ein auszuwählendes Frame festlegt.

4. Videobild-Verteilungsvorrichtung nach Anspruch 3, **dadurch gekennzeichnet, dass** die Videobild-Anpassungseinheit ein Frame, das den Gegenstand anzeigt, so nah wie möglich an einem Mittelpunkt des Bildschirms auswählt.

5. Videobild-Verteilungsvorrichtung nach Anspruch 3, **dadurch gekennzeichnet, dass** die Videobild-Anpassungseinheit ein Frame auswählt, das den Gegenstand so groß wie möglich auf dem Bildschirm anzeigt.

6.  Videobild-Verteilungsvorrichtung nach Anspruch 1, **dadurch gekennzeichnet, dass**
    die Videobild-Analyseeinheit die Detail-Informationen mit einem vordefinierten Deskriptor beschreibt und
    die Videobild-Anpassungseinheit ein auszuwählendes Frame aufgrund der mit dem Deskriptor beschriebenen Detail-Informationen festlegt.

7.  Videobild-Verteilungsvorrichtung nach Anspruch 1, **dadurch gekennzeichnet, dass**
    die Videobild-Verteilungsvorrichtung weiterhin eine Messeinheit aufweist, die so betreibbar ist, dass sie einen Status des in dem Videobild enthaltenen Gegenstands misst, und
    die Videobild-Analyseeinheit die Detail-Informationen aufgrund eines von der Messeinheit gemessenen Ergebnisses erzeugt.

8.  Videobild-Verteilungsvorrichtung nach Anspruch 7, **dadurch gekennzeichnet, dass**
    die Präferenz-Informationen einen Deskriptor, der den Gegenstand identifiziert, und einen Deskriptor, der das Präferenzniveau des Zuschauers quantitativ für jeden Gegenstand spezifiziert, enthalten,
    die Videobild-Analyseeinheit die Detail-Informationen, die Informationen enthalten, die angeben, ob der spezielle Gegenstand auf dem Bildschirm angezeigt wird oder nicht, aufgrund des von der Messeinheit gemessenen Ergebnisses erzeugt und
    die Videobild-Anpassungseinheit das Frame, das den Gegenstand mit dem höchsten Präferenzniveau anzeigt, aufgrund der Präferenz-Informationen auswählt.

9.  Videobild-Verteilungsvorrichtung nach Anspruch 8, **dadurch gekennzeichnet, dass**
    die Videobild-Analyseeinheit die Detail-Informationen, die Informationen enthalten, die die Position oder den Bereich auf dem Bildschirm angeben, wo der Gegenstand mit dem speziellen hohen Präferenzniveau angezeigt wird, aufgrund des von der Messeinheit gemessenen Ergebnisses erzeugt und
    die Videobild-Anpassungseinheit aufgrund der Detail-Informationen und der Präferenz-Informationen das Frame, das den Gegenstand mit dem höchsten Präferenzniveau anzeigt, so nah wie möglich an dem Mittelpunkt des Bildschirms auswählt.

10. Videobild-Verteilungsvorrichtung nach Anspruch 1, **dadurch gekennzeichnet, dass** die Videobild-Anpassungseinheit aufgrund der für die vorhergehenden Frames erzeugten vorhergehenden Detail-Informationen ein auszuwählendes Frame in vordefinierten Intervallen festlegt.

11. Videobild-Verteilungsvorrichtung nach Anspruch 1, **dadurch gekennzeichnet, dass**
    die Präferenz-Informationen Informationen enthalten, die das Präferenzniveau des Zuschauers für jeden der mehreren Gegenstände angeben,
    die Videobild-Analyseeinheit die Detail-Informationen erzeugt, die Informationen enthalten, die jeden der auf dem Bildschirm angezeigten mehreren Gegenstände spezifizieren, und
    die Videobild-Anpassungseinheit das Frame auswählt, das unter den mehreren Gegenständen den Gegenstand mit dem höchsten Präferenzniveau anzeigt.

12. Videobild-Verteilungsvorrichtung nach Anspruch 11, **dadurch gekennzeichnet, dass**
    die Videobild-Analyseeinheit die Detail-Informationen erzeugt, die Informationen enthalten, die die einzelnen Impulse der mehreren Gegenstände angeben, und
    die Videobild-Anpassungseinheit den Gegenstand mit dem größten Funktionswert, der das Präferenzniveau und den Impuls bewertet, von den Funktionswerten der mehreren Gegenstände spezifiziert und das Frame, das den spezifizierten Gegenstand anzeigt, auswählt.

13. Videobild-Verteilungsvorrichtung nach Anspruch 12, **dadurch gekennzeichnet, dass**
    die Videobild-Analyseeinheit das Erzeugen der Detail-Informationen aufgrund der von der Videobild-Erfassungseinheit erfassten Videobilder in regelmäßigen Zeitintervallen wiederholt und
    die Videobild-Anpassungseinheit das Auswählen eines Frames aus den in jedem der mehreren Videobilder enthaltenen Frames aufgrund der von der Videobild-Analyseeinheit erzeugten Detail-Informationen in regelmäßigen Zeitintervallen wiederholt.

14. Videobild-Verteilungsvorrichtung nach Anspruch 11, **dadurch gekennzeichnet, dass**
    die Videobild-Analyseeinheit die Detail-Informationen erzeugt, die Informationen enthalten, die die einzelnen Impulse der mehreren Gegenstände angeben, und

die Videobild-Anpassungseinheit die Anzahl der Frames, die den Gegenstand mit dem höchsten Präferenzniveau von den in jedem der mehreren Videobilder enthaltenen Frames anzeigen, zählt, ein Frame, das den Gegenstand mit dem zweithöchsten Präferenzniveau anzeigt, auswählt, wenn die Anzahl 0 ist, das Frame auswählt, wenn die Anzahl 1 ist, und ein Frame auswählt, das aufgrund mindestens entweder der Anzeigeposition, der Anzeigegröße oder des Impulses des auf dem Bildschirm angezeigten Gegenstands festgelegt wird, wenn die Anzahl 2 oder größer ist.

**15.** Videobild-Verteilungsvorrichtung nach Anspruch 1, **dadurch gekennzeichnet, dass**

die Videobild-Verteilungsvorrichtung weiterhin eine Zusatzinformationen-Speichereinheit aufweist, die so betreibbar ist, dass sie Zusatzinformationen, die den einzelnen Frames entsprechen, die in jedem der mehreren Video bilder enthalten sind, vorher speichert, und

die Videobild-Anpassungseinheit die Zusatzinformationen, die dem Frame entsprechen, das aus den in jedem der mehreren Videobilder enthaltenen Frames ausgewählt und festgelegt wird, ausliest und die Zusatzinformationen mit dem betreffenden Frame verteilt.

**16.** Videobild-Verteilungsverfahren zum Verteilen eines Videobilds über ein Kommunikationsnetz mit:

einem Videobild-Erfassungsschritt zum Erfassen mehrerer Videobilder, die aus verschiedenen Perspektiven aufgenommen werden;

einem Videobild-Analyseschritt zum Analysieren von Details jedes der in den einzelnen Videobildern enthaltenen Frames und zum Erzeugen von Detail-Informationen, die angeben, was als Gegenstand in dem Frame aufgenommen wird, für jedes der in den einzelnen Videobildern enthaltenen Frames; und

einem Videobild-Anpassungsschritt zum Verifizieren eines Konformitätsniveau jedes der in den einzelnen Videobildern enthaltenen Frames mit einer Präferenz des Zuschauers aufgrund der Detail-Informationen und von von dem Zuschauer mitgeteilten Präferenz-Informationen, zum nacheinander Auswählen von Frames mit einem höchsten Konformitätsniveau, zum Editieren der ausgewählten Frames durch Verknüpfen der ausgewählten Frames und zum Verteilen eines durch Editieren der ausgewählten Frames erhaltenen Videobilds.

**17.** Computerprogrammprodukt, das, wenn es auf einem Computer läuft, der mit einer Videobild-Verteilungsvorrichtung (10) verbunden ist, die so betreibbar ist, dass sie ein Videobild über ein Kommunikationsnetz (30) verteilt, die Videobild-Verteilungsvorrichtung (10) ein Videobild über das Kommunikationsnetz (30) nach dem Videobild-Verteilungsverfahren nach Anspruch 16 verteilen lässt.

**18.** Videobild-Verteilungssystem (1), das so betreibbar ist, dass es ein Videobild über ein Kommunikationsnetz (30), das eine Videobild-Verteilungsvorrichtung (10) nach Anspruch 1 und eine Videobild-Empfangsvorrichtung (20) aufweist, verteilt, wobei die Videobild-Empfangsvorrichtung (20) Folgendes aufweist:

eine Sende-Einheit (230), die so betreibbar ist, dass sie die Präferenz-Informationen an die Videobild-Verteilungsvorrichtung (10) sendet;

eine Empfangseinheit (230), die so betreibbar ist, dass sie das von der Videobild-Verteilungsvorrichtung (10) verteilte Videobild mit dem höchsten Konformitätsniveau empfängt; und

eine Anzeigeeinheit, die so betreibbar ist, dass sie das empfangene Videobild empfängt.

## Revendications

**1.** Dispositif de distribution de vidéo (10) pouvant être mis en oeuvre pour distribuer une vidéo par l'intermédiaire d'un réseau de communication (30) comprenant :

une unité d'acquisition vidéo (110) pouvant être mise en oeuvre pour acquérir plusieurs vidéos prises à partir de diverses perspectives, et
**caractérisé en ce qu'**il comprend en outre :

une unité d'analyse de vidéo (120) pouvant être mise en oeuvre pour analyser des détails de chacune des vues comprises dans chacune des vidéos et générer des informations de détails, pour chacune des vues comprises dans chacune des vidéos, indiquant ce qui est filmé en tant qu'objet dans la vue, et
une unité de mise en correspondance de vidéos (130) pouvant être mise en oeuvre pour vérifier un niveau de conformité de chacune des vues comprises dans chacune des vidéos avec les préférences d'un téléspectateur sur la base de chacune des informations de détails et des informations de préférences notifiées par le téléspectateur, sélectionner, une par une, les vues présentant le niveau de conformité le plus haut, monter les vues sélectionnées en connectant les vues sélectionnées, et distribuer une vidéo obtenue en montant des vues sélectionnées.

2. Dispositif de distribution de vidéo selon la revendication 1, dans lequel
les informations de préférences comprennent les informations indiquant un niveau de préférence du téléspectateur pour un objet, et
l'unité d'analyse de vidéo génère les informations de détails contenant des informations qui spécifient l'objet devant être affiché sur un écran.

3. Dispositif de distribution de vidéo selon la revendication 2, dans lequel
l'unité d'analyse de vidéo génère les informations de détails contenant des informations qui indiquent une position ou une zone sur l'écran où l'objet est affiché, et
l'unité de mise en correspondance de vidéos décide d'une vue devant être sélectionnée sur la base de la position ou de la zone sur l'écran où l'objet présentant le niveau de préférence le plus élevé est affiché.

4. Dispositif de distribution de vidéo selon la revendication 3, dans lequel l'unité de mise en correspondance de vidéos sélectionne une vue affichant l'objet aussi près que possible du centre de l'écran.

5. Dispositif de distribution de vidéo selon la revendication 3, dans lequel l'unité de mise en correspondance de vidéos sélectionne une vue affichant l'objet aussi grand que possible sur l'écran.

6. Dispositif de distribution de vidéo selon la revendication 1, dans lequel
l'unité d'analyse de vidéo décrit les informations de détails avec un descripteur prédéfini, et
une unité de mise en correspondance de vidéos décide d'une vue devant être sélectionnée sur la base des informations de détails décrites avec le descripteur.

7. Dispositif de distribution de vidéo selon la revendication 1, dans lequel
le dispositif de distribution de vidéo comprend en outre une unité de mesure pouvant être mise en oeuvre pour mesurer un état d'un objet contenu dans la vidéo, et
l'unité d'analyse de vidéo génère les informations de détails sur la base d'un résultat mesuré par l'unité de mesure.

8. Dispositif de distribution de vidéo selon la revendication 7, dans lequel
les informations de préférences comprennent un descripteur identifiant l'objet et un descripteur spécifiant le niveau de préférence du téléspectateur quantitativement pour chaque objet,
l'unité d'analyse de vidéo génère les informations de détails comprenant des informations qui indiquent si l'objet spécifique est affiché ou non sur l'écran sur la base du résultat mesuré par l'unité de mesure, et
l'unité de mise en correspondance de vidéos sélectionne la vue affichant l'objet avec le niveau de préférence le plus élevé sur la base des informations de préférences.

9. Dispositif de distribution de vidéo selon la revendication 8, dans lequel
l'unité d'analyse de vidéo génère les informations de détails sur la base du résultat mesuré par l'unité de mesure, lesquelles comprennent des informations indiquant la position ou la zone sur l'écran où l'objet présentant le niveau de préférence élevé spécifique est affiché, et
l'unité de mise en correspondance de vidéos sélectionne la vue affichant l'objet présentant le niveau de préférence le plus élevé aussi près que possible du centre de l'écran sur la base des informations de détails et des informations de préférences.

10. Dispositif de distribution de vidéo selon la revendication 1, dans lequel l'unité de mise en correspondance de vidéos décide d'une vue à sélectionner à des intervalles prédéfinis sur la base des informations de détails précédentes générées pour les vues précédentes.

11. Dispositif de distribution de vidéo selon la revendication 1, dans lequel
les informations de préférences comprennent des informations indiquant le niveau de préférence du téléspectateur pour chacun des plusieurs objets,
l'unité d'analyse de vidéo génère des informations de détails comprenant des informations qui spécifient chacun des plusieurs objets affichés sur l'écran, et

l'unité de mise en correspondance de vidéos sélectionne la vue affichant l'objet présentant le niveau de préférence le plus élevé parmi les plusieurs objets.

**12.** Dispositif de distribution de vidéo selon la revendication 11, dans lequel

l'unité d'analyse de vidéo génère les informations de détails qui comprennent des informations indiquant chaque quantité de mouvement des plusieurs objets, et

l'unité de mise en correspondance de vidéos spécifie l'objet ayant la valeur de fonction la plus importante qui évalue à la fois le niveau de préférence et la quantité de mouvement parmi ceux des plusieurs objets, et sélectionne la vue affichant l'objet spécifique.

**13.** Dispositif de distribution de vidéo selon la revendication 12, dans lequel

l'unité d'analyse de vidéo répète la génération des informations de détails à des intervalles de temps réguliers sur la base des plusieurs vidéos acquises par l'unité d'acquisition vidéo, et

l'unité de mise en correspondance de vidéos répète, aux intervalles de temps réguliers, la sélection d'une vue à partir des vues comprises dans chacune des plusieurs vidéos, sur la base des informations de détails générées par l'unité d'analyse de vidéo.

**14.** Dispositif de distribution de vidéo selon la revendication 11, dans lequel

l'unité d'analyse de vidéo génère les informations de détails comprenant des informations qui indiquent chaque quantité de mouvement des plusieurs objets, et

l'unité de mise en correspondance de vidéos compte le nombre de vues affichant l'objet présentant le niveau de préférence le plus élevé parmi les vues comprises dans chacune des plusieurs vidéos, sélectionne une vue affichant l'objet présentant le second niveau de préférence le plus élevé lorsque le nombre est 0, sélectionne la vue lorsque le nombre est 1, et sélectionne une vue décidée sur la base d'au moins l'une de la position d'affichage, de la taille d'affichage et de la quantité de mouvement de l'objet affiché sur l'écran lorsque le nombre est 2 ou plus.

**15.** Dispositif de distribution de vidéo selon la revendication 1, dans lequel

le dispositif de distribution de vidéo comprend en outre une unité de mémoire d'informations supplémentaires pouvant être mise en oeuvre pour mémoriser des informations supplémentaires correspondant à chacune des vues comprises dans chacune des plusieurs vidéos à l'avance, et

l'unité de mise en correspondance de vidéos lit les informations supplémentaires correspondant à la vue sélectionnée et décidée à partir des vues comprises dans chacune des plusieurs vidéos, et distribue les informations supplémentaires avec la vue concernée.

**16.** Procédé de distribution de vidéo destiné à distribuer une vidéo par l'intermédiaire d'un réseau de communication, comprenant :

une étape d'acquisition de vidéo destinée à acquérir plusieurs vidéos prises à partir de diverses perspectives,

une étape d'analyse de vidéo destinée à analyser des détails de chacune des vues incluses dans chacune des vidéos et destinée à générer des informations de détails, pour chacune des vues comprises dans chacune des vidéos, indiquant ce qui est filmé en tant qu'objet dans la vue, et

une étape de mise en correspondance de vidéos destinée à vérifier un niveau de conformité de chacune des vues comprises dans chacune des vidéos à des préférences d'un téléspectateur sur la base de chacune des informations de détails et des informations de préférences notifiées par le téléspectateur, à sélectionner, une par une, les vues présentant le niveau de conformité le plus élevé, à monter les vues sélectionnées en connectant les vues sélectionnées, et à distribuer une vidéo obtenue en montant les vues sélectionnées.

**17.** Produit de programme informatique qui, lorsqu'il est exécuté sur un ordinateur connecté à un dispositif de distribution de vidéo (10) pouvant être mis en oeuvre pour distribuer une vidéo par l'intermédiaire d'un réseau de communication (30), amène le dispositif de distribution de vidéo (10) à distribuer une vidéo par l'intermédiaire du réseau de communication (30) conformément au procédé de distribution de vidéo selon la revendication 16.

**18.** Système de distribution de vidéo (10) pouvant être mis en oeuvre pour distribuer une vidéo par l'intermédiaire d'un réseau de communication (30) comprenant un dispositif de distribution de vidéo (10) conforme à la revendication 1 et un dispositif de réception de vidéo (20), où le dispositif de réception de vidéo (20) comprend :

une unité d'envoi (230) pouvant être mise en oeuvre pour envoyer les informations de préférences au dispositif de distribution de vidéo (10),

une unité de réception (230) pouvant être mise en oeuvre pour recevoir la vidéo présentant le niveau de conformité le plus élevé distribuée à partir du dispositif de distribution de vidéo (10), et

une unité d'affichage pouvant être mise en oeuvre pour afficher la vidéo reçue.

## Fig. 1

## Fig. 2

Video distribution device 10

Video receiving device 20

S11 Multi-perspective video acquisition

S12 Video analysis, detail information generation

S13 Multi-perspective videos, detail information storage

S14 Mode selection dialogue — Live storage

S15 Mode designation

S16 Mode designation information

S17 Content list information

S18 Content designation

S19 Preference value entry dialogue

S20 Preference information

S21 Store preference information in the history table

S22 Matching, decide a video to be distributed

S23 Video stream

S24 Video reproduction

S25 Position designation on the screen

S26 Position information

S27 Object specification on the screen

S28 Additional information

S29 Additional information display

22

Fig. 3A

Fig. 3B

Fig. 3C

Fig. 4

Xmin=40  Xmax=140

A

B

225

180

140

Ymin=30

70

Ymax=210

250

# Fig. 5

Detail information

```
<Information>

<ID1>
    <IDName> Anndo </IDName>
    <IDOrganization>
        REDS
    </IDOrganization>
</ID1>
<RegionLocator>
    <Position>
        40 30 140 210
    </Position>
</RegionLocator>

<ID52>
    <IDName> Niyamoto </IDName>
    <IDOrganization>
        WHITES
    </IDOrganization>
</ID52>
<RegionLocator>
    <Position>
        180 70 225 250
    </Position>
</RegionLocator>

</Information>
```

Fig. 6

REDS

Anndo
1
75

Yamata
2
40

Ihana
3
65

WHITES

Kojina
1
20

Niyamoto
52
80

Ennda
4
52

To previous screen

To next screen

# Fig. 7

Preference information

```
<ID1>
  <IDName> Anndo </IDName>
  <Preference> 75 </Preference>
</ID1>

<ID2>
  <IDName> Yamata </IDName>
  <Preference> 40 </Preference>
</ID2>

<ID3>
  <IDName> Ihana </IDName>
  <Preference> 65 </Preference>
</ID3>

<ID51>
  <IDName> Kojina </IDName>
  <Preference> 20 </Preference>
</ID51>

<ID52>
  <IDName> Niyamoto </IDName>
  <Preference> 80 </Preference>
</ID52>

<ID53>
  <IDName> Ennda </IDName>
  <Preference> 52 </Preference>
</ID53>
            .
            .
            .
```

## Fig. 8

```
        ( Start the video decision process )
                        |                        S2201
 [ Decide a player at the highest preference level ]
                        |
                        |                  S2202
                     /  How many  \
                    /  video(s) containing the  \
                     \    player?   /
                        \          /
        |                    |                        |
      ( 0 )              (Only 1)              (2 or more)
        |                    |                        |
        |                    |                  /  Rectangular area  \  No    S2204
        |                    |                  \     exists?      /---------+
        |                    |                     \            /            |
        |                    |               Yes  S2205                    S2206
     S2207               S2203                  |                            |
 [ Select a video    [ Select the video ]  [ Select a video having   [ Select a video having the
   after the                                  the biggest rectangular    object closer to the center
   next preferred                             area ]                     of the screen ]
   player is
   decided ]
        |                    |                        |                      |
        +--------------------+------->|<--------------+----------------------+
                             ( End )
```

EP 1 301 039 B1

# Fig. 9

Start the video decision process

S2211

Yes ◇ Rectangular information exists? No

S2212
Calculate each player's rectangular area

S2213
$\sum$(rectangular area $\times$ preference value)

S2214
Select a video having the biggest total point

S2215
Calculate each player's function value

S2216
$\sum$(function value $\times$ preference value)

S2217
Decide a video having the biggest total point

End

EP 1 301 039 B1

## Fig. 10

Additional information

```
<ID52>
  <IDName> Niyamoto </IDName>
  <DateOfBirth> 1981/08/24 </DateOfBirth>
  <Career> Candidate for Japan National Team </Career>
  <SpecialAbility> Defense </SpecialAbility>
  <Comment> Let me interpret what Troussier says. </Comment>
</ID52>
```

EP 1 301 039 B1

## Fig. 11

Video distribution device 40

- Video acquisition unit 110
- Video analysis unit 120
- Additional information providing unit 410 151
- Video recording unit 420
  - Preference DB 145, 146
  - Content DB 421, 142, 143, 424
- Video multiplexing unit 430
- Multiplexed video information distribution unit 440

30

Video receiving device 50

- Send/receive unit 230
- Display video matching unit 510
- Video recording unit 520
  - Preference DB 525, 146, 147
  - Content DB 521, 524, 523
- Operation unit 210
- Video output unit 220

2

# Fig. 12

Video distribution device 40

Video receiving device 50

Multi-perspective video acquisition — S11

S32

Video analysis, detail information, additional information generation

S33

Multi-perspective videos, detail information, additional information storage

S14 Mode selection dialogue | Live storage |

S15

S16 Mode designation

Mode designation information

S17 Content list information

Content designation — S18

S39 Multi-perspective videos | Detail information | Additional information

S40

Multi-perspective videos, detail information, additional information

S41

Preference value entry dialogue display

S42

Store preference information in the history table

S43

Matching, decide a video to be reproduced

S44

Video reproduction

S45

Position designation on the screen

S46

Object specification on the screen

S47

Additional information display

# Fig. 13

430

510

Detail information

Additional information

Camera 1

Video information

Multiplex

Multiplex

Separate

Camera 2

Multiplex

Separate

Multiplex

Separate

EP 1 301 039 B1

Fig. 14

# Fig. 15

## Fig. 16

Detail information

```
<Information>
<ID102>
   <IDname>Shimohara</IDname>
   <IDOrganization>
    Spade
   </IDOrganization>
</ID102>
<RegionLocator>
 <Position>
    40  40  160  200
 </Position>
 <Location>
    100  100
 </Location>
 </RegionLocator>
 <Motion>
    1280
 </Motion>
</Information>
```

# Fig. 17

```
      ( Video decision process )
                 |
                 |                              S2221
┌──────────────────────────────────────────┐
│   Calculate each player's rectangular area │
└──────────────────────────────────────────┘
                 |
                 |                              S2222
┌──────────────────────────────────────────┐
│    Calculate each player's function value  │
└──────────────────────────────────────────┘
                 |
                 |                              S2223
┌──────────────────────────────────────────┐
│     Readout each player's momentum         │
└──────────────────────────────────────────┘
                 |
                 |                              S2224
┌──────────────────────────────────────────┐
│  Σ (rectangular area × preference value)   │
│  + Σ (function value × preference value)   │
│         + Σ (momentum)                     │
└──────────────────────────────────────────┘
                 |
                 |                              S2225
┌──────────────────────────────────────────┐
│ Select a video having the biggest total point │
└──────────────────────────────────────────┘
                 |
                 |
             (   End   )
```